(19) Europäisches Patentamt / European Patent Office / Office européen des brevets

(11) **EP 3 356 293 B1**

(12) **FASCICULE DE BREVET EUROPEEN**

(45) Date de publication et mention de la délivrance du brevet:
**17.03.2021 Bulletin 2021/11**

(21) Numéro de dépôt: **16785231.8**

(22) Date de dépôt: **27.09.2016**

(51) Int Cl.:
*C01B 33/22* (2006.01)     *C01B 33/42* (2006.01)

(86) Numéro de dépôt international:
**PCT/FR2016/052454**

(87) Numéro de publication internationale:
**WO 2017/055736 (06.04.2017 Gazette 2017/14)**

(54) **COMPOSÉ MINÉRAL SYNTHÉTIQUE, COMPOSITION COMPRENANT UN TEL COMPOSÉ ET PROCÉDÉ DE PRÉPARATION D'UN TEL COMPOSÉ**

SYNTHETISCHE MINERALVERBINDUNG, ZUSAMMENSETZUNG MIT EINER SOLCHEN VERBINDUNG UND VERFAHREN ZUR HERSTELLUNG SOLCH EINER VERBINDUNG

SYNTHETIC MINERAL COMPOUND, COMPOSITION INCLUDING SUCH A COMPOUND AND METHOD FOR MANUFACTURING SUCH A COMPOUND

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.09.2015 FR 1559129**

(43) Date de publication de la demande:
**08.08.2018 Bulletin 2018/32**

(73) Titulaires:
- **Centre National de la Recherche Scientifique CNRS**
  **75794 Paris Cedex 16 (FR)**
- **Université Paul Sabatier Toulouse III**
  **31400 Toulouse (FR)**

(72) Inventeurs:
- **MARTIN, François**
  **31570 Sainte Foy D'aigrefeuille (FR)**
- **LE ROUX, Christophe**
  **31290 Avignonet Lauragais (FR)**
- **MICOUD, Pierre**
  **31390 Peyssies (FR)**
- **CLAVERIE, Marie**
  **40150 Hossegor (FR)**
- **AYMONIER, Cyril**
  **33130 Bègles (FR)**

(74) Mandataire: **Lavoix**
**2, place d'Estienne d'Orves**
**75441 Paris Cedex 09 (FR)**

(56) Documents cités:
**WO-A1-2014/164632     US-A- 3 666 407**

- **Torii: "The Clay Science Society of Japan NII-Electronic Library Service", , 31 décembre 1987 (1987-12-31), XP055284543, Extrait de l'Internet: URL:http://ci.nii.ac.jp/els/110003709495.pdf?id=ART0004782989&type=pdf&lang=en&host= cinii&order_no=&ppv_type=0&lang_sw=&no=146 7203363&cp= [extrait le 2016-06-29]**
- **W T Granquist ET AL: "A STUDY OF THE SYNTHESIS O F HECTORITE", , 31 décembre 1959 (1959-12-31), XP055284386, Extrait de l'Internet: URL:http://www.clays.org/journal/archive/v olume 8/8-1-150.pdf [extrait le 2016-06-29]**
- **ANDRZEJ KRYSZTAFKIEWICZ ET AL: "Amorphous magnesium silicate - synthesis, physicochemical properties and surface morphology", ADVANCED POWDER TECHNOLOGY, vol. 15, no. 5, 1 septembre 2004 (2004-09-01), pages 549-565, XP055060839, ISSN: 0921-8831, DOI: 10.1163/1568552042000183**

**Description**

L'invention concerne un composé minéral synthétique, dit mica synthétique, et une composition comprenant au moins un tel composé minéral synthétique.

L'invention concerne également un procédé de préparation d'un tel composé minéral synthétique.

De nombreux minéraux tels que les borates ou les silicates sont utilisés dans divers domaines industriels. Les phyllosilicates sont par exemple utilisés sous forme de particules dans de nombreux secteurs industriels, tels que : les thermoplastiques, les thermodurcissables, les cosmétiques, la peinture ou encore les vernis. Les phyllosilicates tels que les micas sont en particulier utilisés par incorporation dans une composition, à titre de charge inerte (en particulier pour leur stabilité chimique et leurs propriétés d'isolant thermique) ou de charges fonctionnelles (par exemple pour renforcer les propriétés mécaniques de certains matériaux). Les micas sont par exemple utilisés dans des résines polymères, notamment sous la forme de feuilles ou de rubans, à titre d'isolant électrique et thermique de barres de cuivre dans les moteurs et alternateurs à haute tension, dans des câbles électriques destinés à être installés dans des installations aux exigences de sécurité élevées (telles que tunnels, bateaux, aéroports, hôpitaux, etc...), dans des protections pour plaques de chauffage ou appareils électroménagers (tels que des sèche-cheveux, fours à micro-ondes, grille-pain...) ou encore dans des joints automobiles ou dans tout type de pièce isolante. Les micas peuvent également être utilisés à l'état pulvérulent (sans être incorporés dans un autre matériau) et en particulier sous forme de paillettes, pour leur propriété de résistance au feu, leur inertie chimique et leur propriété d'isolation acoustique.

Dans tout le texte, on désigne par « non gonflant(e) », tout phyllosilicate ou toute particule minérale dont la raie de diffraction (001) n'est pas affectée par un traitement par mise en contact avec de l'éthylène glycol ou du glycol, c'est-à-dire dont la distance interatomique correspondant à la raie de diffraction (001) (aux rayons X) n'augmente pas après mise en contact dudit phyllosilicate avec de l'éthylène glycol ou du glycol.

Les micas appartiennent à la famille des phyllosilicates. Les phyllosilicates sont constitués par un empilement régulier de feuillets élémentaires de structure cristalline, dont le nombre varie de quelques unités à plusieurs milliers d'unités. Parmi les phyllosilicates (silicates lamellaires), le groupe comprenant notamment le talc, le mica et la montmorillonite est caractérisé par le fait que chaque feuillet élémentaire est constitué par l'association de deux couches de tétraèdres situées de part et d'autre d'une couche d'octaèdres. La couche octaédrique des phyllosilicates 2:1 est formée de deux plans d'ions $O^{2-}$ et $OH^-$ (dans la proportion molaire $O^2/OH^-$ de 2/1). De part et d'autre de cette couche médiane viennent s'agencer des réseaux bidimensionnels de tétraèdres dont un des sommets est occupé par un oxygène de la couche octaédrique, tandis que les trois autres le sont par des oxygènes sensiblement coplanaires.

Ce groupe correspond aux phyllosilicates 2:1. Au vu de leur structure, les phyllosilicates 2:1 sont également qualifiées de type T.O.T. (tétraèdre-octaèdre-tétraèdre). Les micas se caractérisent notamment par la présence de cations interfoliaires dans des espaces, dits espaces interfoliaires, situés entre les feuillets élémentaires. À la différence des smectites, les micas sont dits non gonflants et se caractérisent par l'absence de molécules d'eau dans les espaces interfoliaires, les molécules d'eau impliquant notamment une propriété de gonflement du minéral.

Comme cela est défini dans la publication scientifique intitulée « Nomenclature of Micas » de Rieder et al. (The Canadian Mineralogist, 1998, Vol. 36, pp 41-48), la formule simplifiée des micas est la suivante :

$$IM_{2-3}\square_{1-0}T_4O_{10}A_2,$$

dans laquelle I désigne un cation interfoliaire (généralement K, Na ou Ca par exemple) ; M est généralement choisi parmi Li, Fe, Mg, Al ou encore Ti ; $\square$ représente une vacance, T est généralement choisi parmi Al, Fe (trivalent) ou encore Si, et A est généralement choisi parmi F et OH notamment.

Les micas comprennent donc généralement de nombreux éléments chimiques dont du silicium, de l'aluminium ou encore du fer dans les sites tétraédriques (T dans la formule générale de Rieder et al.) et du lithium, du fer, du magnésium, de l'aluminium ou encore du titane dans les sites octaédriques (M dans la formule générale de Rieder et al.).

Les micas sont également caractérisés par une raie de diffraction aux rayons X caractéristique d'un plan (001) situé à une distance comprise entre 9,80Å et 10,30Å.

D'autre part, les micas d'origine naturelle comprennent de nombreux éléments chimiques, en proportions variables et dont la nature ne peut être maîtrisée. Or, dans de nombreuses applications, il serait utile de pouvoir maîtriser la nature des éléments chimiques présents dans les micas, en particulier la nature chimique des éléments présents dans les sites octaédriques et les sites tétraédriques.

On connaît également de la publication scientifique intitulée « Hydrothermal synthesis of Mn-Mica » de Choi J. et al., (Applied Clay Science, 2009, Vol. 46, pp69-72), des micas synthétiques comprenant notamment du manganèse et de l'aluminium. Toutefois, les composés obtenus selon cette publication sont limités à des micas de formule chimique particulière comprenant au moins de l'aluminium, du manganèse et du silicium.

On connaît également des procédés de préparation d'hectorite, composé appartenant au groupe des smectites.

La publication scientifique intitulée « The clay science society of Japan NIII-Electronic Library Service », (31 décembre 1987, extrait de l'Internet http://www.ci.nii.ac.jp/els/110003709495.pdf?, XP055284543) décrit un procédé de synthèse d'hectorite à partir d'une solution comprenant du chlorure de magnésium, du silicate de sodium et de l'acide nitrique puis ajout d'hydroxyde de sodium et d'hydroxyde de lithium avant un traitement hydrothermal entre 125°C et 300°C pendant 1 à 24 heures.

La publication scientifique intitulée « A study of the synthesis of hectorite » de W T Granquist et al. (31 décembre 1959, XP055284386, extrait de l'Internet http://www.clays.org/journal/archive/volume 8/8-1-150.pdf) décrit un procédé de synthèse d'hectorite à partir d'une solution de chlorure de magnésium et d'un gel de silice préparé à partir de tétrachlorure de silicium. Cette publication cite également un procédé dans lequel du chlorure de magnésium est ajouté lentement à une solution de silicate de potassium sous ébullition.

US 3 666 407 décrit un procédé de synthèse d'hectorite par calcination de carbonate de lithium et de talc et mélange avec du silicate de sodium et du carbonate de sodium avant un traitement hydrothermal à une température de l'ordre de 185°C.

WO 2014/164632 décrit un procédé de synthèse d'hectorite comprenant du zinc dans lequel la source de silicium peut notamment être choisie parmi la silice, la silice colloïdale, le métasilicate de sodium, le métasilicate de potassium, le kaolin et le talc. WO 2014/164632 indique également qu'un traitement hydrothermal est réalisé entre 125°C et 250°C.

Toutefois, aucun de ces procédés ne permet de préparer des composés appartenant au groupe des micas.

Dans ce contexte, l'invention vise à proposer de nouveaux composés, similaires aux micas naturels, mais dont la nature des éléments chimiques les composant est maîtrisée.

L'invention vise en particulier à proposer de nouveaux composés pouvant être obtenus par voie synthétique à faible coût.

L'invention vise également à proposer de nouveaux composés répondant à la formule générale des micas mais dénués de certains éléments chimiques tels que l'aluminium (Al) ou encore le fluor (F).

L'invention vise également à proposer de nouveaux composés répondant à la formule générale des micas présentant une pureté élevée.

L'invention vise également à proposer de nouveaux composés répondant à la formule générale des micas, et présentant des propriétés structurales très proches de celles des micas naturels- présentant notamment un plan (001) situé à une distance comprise entre 9,80Å et 10,70Å par diffraction des rayons X.

L'invention vise également à proposer de nouveaux composés répondant à la formule générale des micas pouvant se présenter sous la forme de particules de taille nanométrique.

L'invention vise également à proposer un procédé de préparation de tels composés dont la mise en œuvre est simple et rapide, et est compatible avec les contraintes d'une exploitation à l'échelle industrielle.

L'invention vise à proposer un procédé de préparation de particules minérales synthétiques de grande pureté et présentant une lamellarité, une granulométrie fine et de faible dispersion, ainsi qu'une structure cristalline très proches de celles des minéraux naturels, notamment des phyllosilicates naturels et du mica naturel.

L'invention vise également en particulier à proposer un procédé permettant de préparer des composés synthétiques pouvant être utilisées en remplacement de micas naturels, dans diverses de leurs applications.

Pour ce faire, l'invention concerne un composé minéral synthétique, dit mica synthétique, répondant à la formule (I) suivante :

$$A_t(Si_xGe_{1-x})_4M_zO_{10}(OH)_2 \qquad (I)$$

dans laquelle :

- A désigne au moins un cation interfoliaire monovalent ($A^+$) d'un élément métallique, A ayant pour formule $Li_{w(1)}Na_{w(2)}K_{w(3)}Rb_{w(4)}CS_{w(5)}$; Li désignant le lithium, Na désignant le sodium, K désignant le potassium, Rb désignant le rubidium, Cs désignant le césium et chaque $w(i)$ représentant un nombre réel de l'intervalle [0 ; 1], tel que

$$\sum_{i=1}^{5} w(i) = 1,$$

- t est un nombre réel de l'intervalle [0,3 ; 1],
- Si désigne le silicium,
- Ge désigne le germanium,
- x est un nombre réel de l'intervalle [0 ; 1],

- M désigne au moins un métal divalent ayant pour formule $Mg_{y(1)}Co_{y(2)}Zn_{y(3)}Cu_{y(4)}Mn_{y(5)}Fe_{y(6)}Ni_{y(7)}Cr_{y(8)}$; Mg désignant le magnésium, Co désignant le cobalt, Zn désignant le zinc, Cu désignant le cuivre, Mn désignant le manganèse, Fe désignant le fer, Ni désignant le nickel et Cr désignant le chrome ; chaque y(i) représentant un nombre

$$\sum_{i=1}^{8} y(i) = 1,$$

réel de l'intervalle [0 ; 1], tel que

- z est un nombre réel de l'intervalle [2,50 ; 2,85],
- t + 2z est un nombre réel de l'intervalle [5,3 ; 6,0],
- O désigne l'oxygène, et
- H désigne l'hydrogène.

En effet, les inventeurs ont constaté avec surprise qu'il est possible de synthétiser des composés conformes à la formule (I), et qui répondent donc à la formule générale des micas, sans nécessiter la présence d'aluminium. En effet, il semble que les composés selon l'invention ne présentent aucun déficit de charge dans les sites tétraédriques, dans lesquels sont situés les atomes de silicium et/ou de germanium. De façon tout à fait surprenante, de tels composés peuvent être obtenus avec un déficit de charge d'origine octaédrique (les sites octaédriques étant occupés par M).

Un composé selon l'invention appartient au groupe des phyllosilicates. En particulier, un composé selon l'invention présente une structure cristalline correspondant à celle du groupe des micas. En effet, un composé selon l'invention présente des propriétés cristallines très proches de celles des micas naturels. Avantageusement, un composé selon l'invention présente, en diffraction des rayons X, au moins une raie de diffraction caractéristique d'un plan (001) situé à une distance comprise entre 9,70 Å et 10,70 Å, et notamment entre 9,70 Å et 10,30 Å. En particulier, avantageusement, un composé selon l'invention présente, en diffraction des rayons X, au moins une raie de diffraction caractéristique d'un plan (001) situé à une distance comprise entre 9,80 Å et 10,30 Å. Cette raie de diffraction est conservée après un chauffage du composé selon l'invention à une température comprise entre 500°C et 600°C (par exemple pendant une à six heures). Une telle raie de diffraction est caractéristique des micas et sa conservation après un chauffage (ou traitement thermique anhydre) montre que les composés selon l'invention présentent des propriétés physiques et structurelles très similaires à celles des micas naturels.

D'autre part, avantageusement et selon l'invention, ledit composé ne gonfle pas en présence d'éthylène glycol ni de glycol. Les composés selon l'invention sont donc non gonflants, comme les micas et à la différence des smectites.

Les micas se caractérisent également par une grande stabilité thermique. Les composés selon l'invention présentent également une grande stabilité thermique, notamment jusqu'à 650°C (en particulier sans départ d'eau interfoliaire tel que contrôlable par analyse thermogravimétrique (ATG), par analyse thermodifférentielle (ATD) ou par analyse calorimétrique différentielle à balayage (DSC)). En particulier, avantageusement, un composé selon l'invention est thermiquement stable jusqu'à 500°C (notamment dans l'air). En particulier, la structure en feuillets des composés selon l'invention est conservée jusqu'à 700°C, et notamment jusqu'à 600°C.

L'ensemble de ces caractéristiques et de ces propriétés des composés selon l'invention, c'est-à-dire la présence d'une raie de diffraction caractéristique d'un plan (001) situé à une distance comprise entre 9,70 Å et 10,30 Å, en particulier conservée après chauffage, leur absence de gonflement, notamment dans l'éthylène glycol ou le glycol, ainsi que la stabilité thermique des composés attestent du fait qu'ils présentent des propriétés physiques et structurelles correspondant à celles du groupe des micas.

Dans une variante avantageuse d'un composé selon l'invention, t est un nombre réel de l'intervalle [0,8 ; 1], z est un nombre réel de l'intervalle [2,5 ; 2,6].

En outre, dans une variante avantageuse d'un composé selon l'invention, la formule (I) est telle que t + 2z = 6.

D'autre part, conformément à la formule (I), un composé selon l'invention peut comprendre, en sites tétraédriques des atomes de silicium ou des atomes de germanium ou à la fois des atomes de silicium et des atomes de germanium en proportions variables tel que x varie de zéro à un dans $(Si_xGe_{1-x})$. Dans le cas où x est égal à un, le composé selon l'invention ne comprend pas de Ge.

Conformément à la formule (I), un composé selon l'invention peut comprendre, en sites octaédriques, un métal divalent de formule M. M peut donc être choisi dans le groupe formé du magnésium, du cobalt, du zinc, du cuivre, du manganèse, du fer, du nickel et du chrome. Dans une variante particulièrement avantageuse d'un composé selon l'invention, M est uniquement du magnésium (M=Mg). Dans ce cas, le composé selon l'invention a pour formule la formule (II) suivante :

$$A_t(Si_xGe_{1-x})_4Mg_zO_{10}(OH)_2 \qquad (II).$$

Avantageusement, les particules d'un composé selon l'invention de formule (II) est de couleur blanche. Les particules d'un composé selon l'invention comprenant au moins un autre métal que le magnésium à titre de métal M peuvent présenter d'autres couleurs (rose, vert, brun, beige ...).

Dans d'autres variantes avantageuses d'un composé selon l'invention, M comprend du magnésium et au moins un autre métal tel que Mn ou Ni.

En particulier, dans une variante de réalisation d'un composé selon l'invention, *y(3)* est différent de 1. Plus particulièrement, dans une variante selon l'invention, ledit composé est dénué de zinc et y(3) est égal à zéro.

En particulier, dans une variante de réalisation d'un composé selon l'invention, y(6) est différent de 1. Plus particulièrement, dans une variante selon l'invention, ledit composé est dénué de fer et y(6) est égal à zéro. En effet, il peut être avantageux, dans certaines applications de disposer de composés dénués de fer ou dont la teneur en fer est limitée.

Avantageusement et selon l'invention, dans la formule (I), A désigne au moins un élément chimique choisi dans le groupe formé du lithium (Li), du sodium (Na), du potassium (K), du rubidium (Rb) et du césium (Cs) (tel que w(1) = 1, w(2) = 1, w(3) = 1, w(4) = 1 ou w(5) = 1 respectivement).

Dans la formule (I) d'un composé selon l'invention, A désigne un cation métallique disposé dans les espaces interfoliaires (entre les feuillets) dudit composé, chaque feuillet comprenant une succession d'une couche tétraédrique, d'une couche octaédrique puis d'une deuxième couche tétraédrique (soit une structure de type TOT, T désignant une couche tétraédrique et O désignant une couche octaédrique). Ainsi, avantageusement, un composé selon l'invention s'organise selon une structure solide formée de feuillets superposés les uns aux autres et séparés les uns des autres par au moins un espace, dite espace interfoliaire, chaque cation A étant disposé dans lesdits espaces interfoliaires.

En particulier, avantageusement et selon l'invention, A est un cation interfoliaire non échangeable, c'est-à-dire qu'il est associé de façon stable et durable à la structure du mica synthétique. Cela signifie notamment qu'il reste associé audit composé lorsque le composé est mis en suspension dans de l'eau par exemple.

Selon une variante particulièrement avantageuse d'un composé selon l'invention, dans la formule (I), A désigne le potassium. Dans ce cas, le composé présente la formule (III) suivante :

$$K_t(Si_xGe_{1-x})_4M_zO_{10}(OH)_2 \qquad (III).$$

Conformément à la formule (I), un composé selon l'invention présente un coefficient stœchiométrique t relatif à la proportion stœchiométrique de A compris entre 0,30 et 1 (valeurs comprises), et en particulier entre 0,80 et 1 (valeurs comprises). Le coefficient stœchiométrique t est lié à la proportion stœchiométrique de métal M dont le coefficient stœchiométrique est z. Dans une variante avantageuse d'un composé selon l'invention, ledit composé est tel que t=1 et z=2,5 et présente la formule (IV) suivante :

$$A\,(Si_xGe_{1-x})_4M_{2,5}O_{10}(OH)_2 \qquad (IV).$$

Lorsque, dans la formule (IV) précédente, A est le potassium, qu'aucun germanium ne se substitue au silicium et que M est du magnésium, le composé selon l'invention présente la formule (V) suivante :

$$K\,Si_4Mg_{2,5}O_{10}(OH)_2 \qquad (V).$$

Dans une autre variante avantageuse d'un composé selon l'invention, ledit composé est tel que t=0,8 et z=2,6 et présente la formule (VI) suivante :

$$A_{0,8}\,(Si_xGe_{1-x})_4M_{2,6}O_{10}(OH)_2 \qquad (VI).$$

Lorsque, dans la formule (VI) précédente, A est le potassium, qu'aucun germanium ne se substitue au silicium et que M est du magnésium, le composé selon l'invention présente la formule (VII) suivante :

$$K_{0,8}\,Si_4Mg_{2,6}O_{10}(OH)_2 \qquad (VII).$$

L'invention concerne également une composition comprenant au moins un composé selon l'invention.

L'invention concerne également une composition comprenant au moins un composé minéral synthétique, dit mica synthétique, répondant à la formule (I) suivante :

$$A_t(Si_xGe_{1-x})_4M_zO_{10}(OH)_2 \qquad (I)$$

dans laquelle :

- A désigne au moins un cation monovalent ($A^+$) d'un élément métallique, A ayant pour formule $Li_{w(1)}Na_{w(2)}K_{w(3)}Rb_{w(4)}CS_{w(5)}$; Li désignant le lithium, Na désignant le sodium, K désignant le potassium, Rb désignant le rubidium, Cs désignant le césium et chaque *w(i)* représentant un nombre réel de l'intervalle [0 ; 1], tel que

$$\sum_{i=1}^{5} w(i) = 1,$$

- t est un nombre réel de l'intervalle [0,3 ; 1],
- Si désigne le silicium,
- Ge désigne le germanium,
- x est un nombre réel de l'intervalle [0 ; 1],
- M désigne au moins un métal divalent ayant pour formule $Mg_{y(1)}Co_{y(2)}Zn_{y(3)}Cu_{y(4)}Mn_{y(5)}Fe_{y(6)}Ni_{y(7)}Cr_{y(8)}$; Mg désignant le magnésium, Co désignant le cobalt, Zn désignant le zinc, Cu désignant le cuivre, Mn désignant le manganèse, Fe désignant le fer, Ni désignant le nickel et Cr désignant le chrome ; chaque *y(i)* représentant un nombre réel de l'intervalle [0 ; 1], tel que $\sum_{i=1}^{8} y(i) = 1,$

- z est un nombre réel de l'intervalle [2,50 ; 2,85],
- t + 2z est un nombre réel de l'intervalle [5,3 ; 6,0],
- O désigne l'oxygène, et
- H désigne l'hydrogène.

Avantageusement, un composé et une composition selon l'invention sont exempts d'au moins un élément choisi parmi le fer, le zinc et le manganèse. En particulier, avantageusement, une composition selon l'invention est exempte de fer.

D'autre part, il est à noter qu'un composé selon l'invention est exempt d'aluminium et de fluor. En particulier, avantageusement, une composition selon l'invention est également exempte d'au moins un élément choisi parmi l'aluminium et le fluor. De telles compositions peuvent être particulièrement avantageuses dans certaines applications, par exemple des applications cosmétiques (en particulier en ce qui concerne l'aluminium).

En particulier, avantageusement, une composition selon l'invention est exempte d'aluminium.

En particulier, avantageusement, une composition selon l'invention est exempte de fluor.

Avantageusement, une composition selon l'invention est de couleur blanche, en particulier dans le cas où elle comprend des particules de mica synthétique selon l'invention et répondant à la formule (I) dans laquelle M désigne le magnésium et/ou le zinc. Une composition selon l'invention peut également être colorée, notamment dans les cas où elle comprend des particules de mica synthétique selon l'invention et répondant à la formule (I) dans laquelle y(1) est différent de 1, M désignant un autre métal que le magnésium et/ou le zinc ou comprenant du magnésium et/ou du zinc et au moins un autre métal conformément à la définition de M.

Dans tout le texte, on désigne par « épaisseur » des particules la plus petite dimension desdites particules, soit la dimension desdites particules selon la direction c du réseau cristallin desdites particules.

Dans tout le texte, on désigne par « plus grande dimension » des particules, la dimension la plus grande desdites particules dans le plan (a, b) du réseau cristallin desdites particules.

L'épaisseur et la plus grande dimension des particules sont mesurées par observation par microscopie électronique à balayage (MEB) ou par microscopie électronique en transmission (MET).

Avantageusement, une composition selon l'invention comprend des particules dudit composé présentant une taille moyenne inférieure à 500 nm, notamment une taille moyenne comprise entre 10nm et 400nm (par exemple telle qu'observée par microscopie électronique).

Avantageusement, une composition selon l'invention comprend des particules dudit composé présentant une épaisseur comprise entre 1nm et 60nm, en particulier entre 2 nm et 50 nm, par exemple de l'ordre de 10 nm. Avantageusement, une composition selon l'invention comprend des particules dudit composé présentant une plus grande dimension comprise entre 10 nm et 600 nm, en particulier entre 20 nm et 500 nm et plus particulièrement entre 20 nm et 300 nm.

L'invention concerne également un procédé de préparation d'un composé de formule (I) suivante :

$$A_t(Si_xGe_{1-x})_4M_zO_{10}(OH)_2 \qquad (I)$$

dans laquelle :

- A désigne au moins un cation interfoliaire monovalent (A$^+$) d'un élément métallique, A ayant pour formule $Li_{w(1)}Na_{w(2)}K_{w(3)}Rb_{w(4)}CS_{w(5)}$; Li désignant le lithium, Na désignant le sodium, K désignant le potassium, Rb désignant le rubidium, Cs désignant le césium et chaque w(i) représentant un nombre réel de l'intervalle [0 ; 1], tel que

$$\sum_{i=1}^{5} w(i) = 1,$$

- t est un nombre réel de l'intervalle [0,3 ; 1],
- Si désigne le silicium,
- Ge désigne le germanium,
- x est un nombre réel de l'intervalle [0 ; 1],
- M désigne au moins un métal divalent ayant pour formule $Mg_{y(1)}Co_{y(2)}Zn_{y(3)}Cu_{y(4)}Mn_{y(5)}Fe_{y(6)}Ni_{y(7)}Cr_{y(8)}$ ; Mg désignant le magnésium, Co désignant le cobalt, Zn désignant le zinc, Cu désignant le cuivre, Mn désignant le manganèse, Fe désignant le fer, Ni désignant le nickel et Cr désignant le chrome ; chaque y(i) représentant un nombre réel de l'intervalle [0 ; 1], tel que $\sum_{i=1}^{8} y(i) = 1,$

- z est un nombre réel de l'intervalle [2,50 ; 2,85],
- t + 2z est un nombre réel de l'intervalle [5,3 ; 6,0],
- O désigne l'oxygène, et
- H désigne l'hydrogène,

procédé dans lequel :

- on prépare un gel précurseur dudit composé de formule (I), par une réaction de co-précipitation entre :

  ◦ au moins une source d'au moins un élément chimique choisi dans le groupe formé du silicium et du germanium, ladite source dudit élément chimique choisi dans le groupe formé du silicium et du germanium étant choisie dans le groupe formé du métasilicate de potassium et du métagermanate de potassium,
  ◦ au moins un sel métallique dudit métal divalent M,
  ◦ la proportion molaire $(Si_xGe_{1-x})/M$ au cours de la préparation dudit gel précurseur est comprise dans l'intervalle [2/1,425 ; 1,6],

- on ajoute audit gel précurseur au moins un hydroxyde de formule AOH, de façon à ce que la proportion molaire A/M soit au moins égale à t/z,
- on réalise un traitement solvothermal dudit gel précurseur à une température comprise entre 300°C et 600°C (valeurs comprises).

En effet, les inventeurs ont constaté avec une grande surprise qu'en mettant en présence les réactifs ci-dessus en respectant les proportions stoechiométriques du composé de formule (I) en ce qui concerne les rapports molaires $(Si_xGe_{1-x})/M$ et A/M, on obtenait un gel précurseur permettant d'obtenir, après traitement solvothermal, un composé de formule (I), présentant un déficit de charge octaédrique mais correspondant structurellement à un mica synthétique - notamment en ce qui concerne la distance interfoliaire. Ceci, et en particularité la simplicité de ce procédé, est d'autant plus surprenant que celui-ci permet d'obtenir un mica synthétique, c'est-à-dire un minéral synthétique non gonflant, et non un minéral synthétique gonflant appartenant à la famille proche des smectites. En effet, la synthèse d'un minéral synthétique non gonflant tel qu'un mica présentant un déficit de charge tétraédrique (notamment comprenant de l'aluminium) nécessite habituellement des pressions et des températures très élevées ; alors qu'il est plus aisé de préparer des composés phyllosilicates présentant des déficits octaédriques, des smectites par exemple.

En outre, il est à noter que l'hydroxyde de formule AOH ajouté audit gel précurseur peut également provenir de tout composé adapté pour générer au moins un hydroxyde de formule AOH par réaction avec le milieu fluide dans lequel est réalisé le traitement solvothermal. L'hydroxyde de formule AOH peut par exemple être généré en partie grâce à l'ajout d'un alcoolate alcalin (comprenant du sodium ou du potassium par exemple) tel que l'éthylate de potassium dans le milieu de traitement solvothermal.

Avantageusement et selon l'invention, au cours de la préparation dudit gel précurseur, on ajoute en outre au moins un acide, en particulier un acide choisi dans le groupe formé des acides minéraux, des acides carboxyliques (l'acide acétique par exemple) et des acides sulfoniques ($RSO_3H$, R étant un groupement organique). L'acide utilisé peut par exemple être l'acide sulfurique ($H_2SO_4$). En particulier, avantageusement et selon l'invention, au cours de la préparation du gel précurseur, on ajoute au moins un acide de façon à ce que la somme du nombre de mole de l'anion provenant de l'acide (par exemple $SO_4^{2-}$ dans la cas de l'acide sulfurique) et du nombre de mole de l'anion provenant du sel métallique dudit métal M est au moins égale ou légèrement inférieure au nombre de mole de potassium provenant de ladite source d'au moins un élément choisi dans le groupe formé du silicium et du germanium.

Avantageusement et selon l'invention, préalablement audit traitement solvothermal et consécutivement à la précipitation dudit gel précurseur, on lave ledit gel précurseur avec un fluide de rinçage, en particulier avec un fluide de rinçage dénué de toute espèce réactive (produits de départ pour la préparation du gel précurseur), notamment dénué de A et de M. En particulier on lave ledit gel précurseur avec de l'eau ou encore de l'éthanol. Un tel lavage permet d'éliminer les sels formés en tant que sous-produits de la réaction de co-précipitation du gel précurseur.

Avantageusement et selon l'invention, on réalise ledit traitement solvothermal en continu, en particulier en utilisant un réacteur continu.

Tout réacteur continu connu peut être utilisé dans un procédé selon l'invention. Ainsi, avantageusement et selon l'invention, ledit réacteur continu est un réacteur continu à volume constant. Dans une variante particulièrement avantageuse d'un procédé selon l'invention, on utilise un réacteur continu choisi dans le groupe formé des réacteurs piston (ou réacteurs à écoulement de type piston). Il peut par exemple s'agir de réacteurs tubulaires dans lesquels l'écoulement du milieu réactionnel s'effectue en régime laminaire, turbulent ou intermédiaire. En outre, il est possible d'utiliser tout réacteur continu à co-courant ou à contre-courant en ce qui concerne l'introduction et la mise en contact des différentes compositions et/ou milieux liquides mis en contact dans un procédé selon l'invention.

On réalise le traitement solvothermal du milieu réactionnel dans la zone de traitement solvothermal du réacteur à une pression adaptée pour permettre l'obtention desdites particules synthétiques, en fonction notamment de la température et de la durée du traitement solvothermal. Avantageusement et selon l'invention, on réalise ledit traitement solvothermal à une pression comprise entre 2 MPa et 50 MPa, notamment entre 8 MPa et 40 MPa, et en particulier entre 22 MPa et 30 MPa. Il s'agit en particulier de la pression de vapeur saturante à la température à laquelle est réalisé le traitement solvothermal, si le solvant est l'eau.

Dans une variante particulièrement avantageuse d'un procédé selon l'invention, on réalise ledit traitement solvothermal en milieu aqueux. Il s'agit alors d'un traitement hydrothermal. L'eau peut être utilisée comme unique solvant ou diluant ou encore en mélange avec tout autre fluide.

Un procédé selon l'invention peut également comprendre, ultérieurement audit traitement solvothermal, une étape dans laquelle on soumet ledit mica synthétique obtenu à l'issue du traitement solvothermal, à un traitement thermique anhydre. Avantageusement et selon l'invention, après ledit traitement solvothermal, on réalise un traitement thermique anhydre à une température comprise entre 500°C et 600°C, par exemple à 550°C. La durée d'un tel traitement thermique anhydre peut par exemple être comprise entre 30 minutes et 24 heures, notamment entre 45 minutes et 12 heures. Un tel traitement thermique anhydre peut permettre d'augmenter la proportion en composé(s) de formule (I) dans une composition obtenue par un procédé selon l'invention. Un tel traitement thermique anhydre peut également permettre d'augmenter la cristallinité du composé obtenu. En particulier, avantageusement et selon l'invention, à l'issue d'un tel traitement thermique anhydre, on obtient une composition comprenant au moins 90 % en poids, et plus particulièrement au moins 95 % en poids, de particules du composé de formule (I) selon l'invention.

L'invention concerne aussi un composé, une composition et un procédé caractérisés en combinaison par tout ou partie des caractéristiques mentionnées ci-dessus ou ci-après.

D'autres buts, caractéristiques et avantages de l'invention apparaissent à la lecture de la description suivante d'un de ses modes de réalisation préférentielle donnée à titre d'exemple non limitatif, et qui se réfère aux figures annexées dans lesquelles :

- la figure 1 est une vue schématique d'un dispositif permettant de mettre en œuvre un procédé selon l'invention dans lequel le traitement solvothermal est réalisé en continu,
- la figure 2 représente un diffractogramme de rayons X d'une composition comprenant un composé de formule $K_{0,3}Si_4Mg_{2,7}O_{10}(OH)_2$ obtenue après un traitement hydrothermal de 24 heures à 300°C,
- la figure 3 représente des thermogrammes obtenus par analyse thermogravimétrique (ATG) et par analyse thermodifférentielle (ATD) d'une composition comprenant un composé de formule $K_{0,3}Si_4Mg_{2,7}O_{10}(OH)_2$ obtenue après un traitement hydrothermal de 24 heures à 300°C,
- la figure 4 représente un diffractogramme de rayons X d'une composition comprenant un composé de formule $K_{0,3}Si_4Mg_{2,7}O_{10}(OH)_2$ obtenue après un traitement hydrothermal de 24 heures à 300°C suivi d'un traitement thermique anhydre à 550°C pendant 5 heures,
- la figure 5 représente des thermogrammes obtenus par analyse thermogravimétrique (ATG) et par analyse thermodifférentielle (ATD) d'une composition comprenant un composé de formule $K_{0,3}Si_4Mg_{2,7}O_{10}(OH)_2$ obtenue après un traitement hydrothermal de 24 heures à 300°C suivi d'un traitement thermique anhydre à 550°C pendant 5 heures,
- la figure 6 représente un diffractogramme de rayons X d'une composition comprenant un composé de formule $K_{0,3}Si_4Ni_{1,35}Mg_{1,35}O_{10}(OH)_2$ obtenue après un traitement hydrothermal de 24 heures à 300°C,
- la figure 7 représente un diffractogramme de rayons X d'une composition comprenant un composé de formule $K_{0,3}Si_4Ni_{1,35}Mg_{1,35}O_{10}(OH)_2$ obtenue après un traitement hydrothermal de 24 heures à 300°C suivi d'un traitement thermique anhydre à 550°C pendant 5 heures,
- la figure 8 représente un diffractogramme de rayons X d'une composition comprenant un composé de formule $Li_{0,3}Si_4Mg_{2,7}O_{10}(OH)_2$ obtenue après un traitement hydrothermal de 24 heures à 300°C,

- la figure 9 représente un diffractogramme de rayons X d'une composition comprenant un composé de formule $Li_{0,3}Si_4Mg_{2,7}O_{10}(OH)_2$ obtenue après un traitement hydrothermal de 24 heures à 300°C suivi d'un traitement thermique anhydre à 550°C pendant 5 heures
- la figure 10 représente un diffractogramme de rayons X d'une composition comprenant un composé de formule K $Si_4Mg_{2,5}O_{10}(OH)_2$ obtenue après un traitement hydrothermal de 24 heures à 300°C,
- la figure 11 représente un diffractogramme de rayons X d'une composition comprenant un composé de formule K $Si_4Mg_{2,5}O_{10}(OH)_2$ obtenue après un traitement hydrothermal de 24 heures à 300°C suivi d'un traitement thermique anhydre à 550°C pendant 4 heures.

A/ - PROTOCOLE GÉNÉRAL DE PRÉPARATION D'UN COMPOSÉ ET D'UNE COMPOSITION SELON L'INVENTION

1/ - Préparation d'un gel précurseur d'un composé de formule (I)

Le gel précurseur d'un composé de formule (I) peut être préparé par une réaction de coprécipitation impliquant, à titre de réactif, au moins une source de silicium et/ou au moins une source de germanium, choisie(s) dans le groupe formé du métasilicate de potassium et du métagermanate de potassium, et au moins un sel métallique d'un métal divalent M, M désignant au moins un métal divalent ayant pour formule $Mg_{y(1)}Co_{y(2)}Zn_{y(3)}Cu_{y(4)}Mn_{y(5)}Fe_{y(6)}Ni_{y(7)}Cr_{y(8)}$ (Mg désignant le magnésium, Co désignant le cobalt, Zn désignant le zinc, Cu désignant le cuivre, Mn désignant le manganèse, Fe désignant le fer, Ni désignant le nickel et Cr désignant le chrome) et chaque y(i) représentant un nombre réel de

$$\sum_{i=1}^{8} y(i) = 1.$$

l'intervalle [0 ; 1], tel que

Cette réaction de coprécipitation permet d'obtenir un gel précurseur présentant la stœchiométrie d'un mica synthétique répondant à la formule (I) d'un composé selon l'invention.

Le gel précurseur est préparé par une réaction de coprécipitation mise en œuvre à partir de :

1. une solution aqueuse dans laquelle est dissous au moins un sel métallique d'un métal divalent M, par exemple une solution aqueuse d'un sulfate métallique ($MSO_4$),

2. une solution d'acide sulfurique ($H_2SO_4$), et

3. une solution aqueuse de métasilicate de potassium ou une solution aqueuse de métagermanate de potassium, ou un mélange de ces deux solutions dans les proportions molaires $x/(1-x)$.

La proportion molaire $(Si_xGe_{1-x})/M$ au cours de la préparation de ce gel précurseur est comprise dans l'intervalle [2/1,425; 1,6], et en particulier dans l'intervalle [2/1,3; 1,6].

La préparation de ce gel précurseur est réalisée en suivant le protocole suivant :

1. on mélange la solution comprenant au moins un sel métallique avec la solution d'acide sulfurique,

2. on y ajoute ensuite la solution aqueuse de métasilicate de potassium et/ou de métagermanate de potassium ; le gel précurseur se forme instantanément.

La suspension obtenue comprenant le gel précurseur peut être soumise à une agitation à température ambiante (par exemple à 22,5°C) pendant 5 à 30 minutes puis être soumise à plusieurs cycles de lavage et de centrifugation ou être directement soumise à ces cycles de lavage et de centrifugation.

Le gel précurseur peut également être récupéré après centrifugation (par exemple entre 3000 et 15000 tours par minute, pendant 5 à 60 minutes) et élimination du surnageant (solution de sulfate de potassium) et lavage à l'eau déminéralisée (par exemples trois lavages et centrifugations successifs).

Le gel précurseur lavé et séparé de la solution comprenant du sulfate de potassium est ensuite soumis à un traitement solvothermal tel qu'obtenu à l'issue de la dernière centrifugation ou éventuellement après avoir été séché (par exemple dans une étuve ou encore par lyophilisation).

On ajoute ensuite audit gel précurseur au moins un hydroxyde de formule AOH de façon à ce que la proportion molaire A/M soit au moins égale à $t/z$.

On obtient ainsi une suspension de gel précurseur et d'hydroxyde AOH.

2/ - Traitement solvothermal dudit gel précurseur

Le gel précurseur tel que précédemment obtenu (après l'ajout de l'hydroxyde AOH) est soumis à un traitement solvothermal à une température comprise notamment entre 300°C et 600°C.

Dans une première variante d'un procédé selon l'invention, le traitement solvothermal du gel précurseur est réalisé dans un réacteur fermé.

Pour ce faire on place le gel précurseur dans un réacteur/autoclave que l'on place à l'intérieur d'un four ou d'une étuve, à une température de réaction prédéterminée (établie entre 300°C et 600°C), pendant toute la durée du traitement solvothermal.

Au préalable, on ajuste éventuellement le rapport liquide/solide à une valeur comprise entre 2 et 80, notamment entre 5 et 50 (la quantité de liquide étant exprimée en $cm^3$, et la quantité de solide, en grammes, et désignant la quantité de gel sec uniquement).

En particulier, il est préférable de placer le réacteur ou l'autoclave dans les conditions de température et de pression du traitement solvothermal moins de 6 heures, notamment moins de 3 heures, et plus particulièrement moins d'une heure, après avoir ajouté l'hydroxyde de formule AOH au gel précurseur.

Au cours du traitement hydrothermal, le gel précurseur acquiert progressivement une consistance gélatineuse. La composition obtenue à l'issue du traitement solvothermal présente une cristallinité observable en diffraction des rayons X, cette cristallinité augmentant avec la durée du traitement solvothermal et se traduisant sur les diffractogrammes correspondants par l'apparition rapide de raies caractéristiques qui s'affinent et s'intensifient rapidement au cours du traitement.

À l'issue de ce traitement solvothermal, on obtient une composition comprenant des particules minérales de mica synthétique conforme à la formule (I) d'un composé selon l'invention en suspension dans une solution, en particulier une solution aqueuse. Au terme de ce traitement solvothermal, la composition contenue dans le réacteur est récupérée par centrifugation (entre 3000 et 15000 tours par minute, pendant 5 à 60 minutes) puis élimination du surnageant.

La composition comprenant des particules minérales récupérée après la dernière centrifugation peut ensuite être séchée :

- à l'étuve à une température comprise entre 60°C et 130°C, pendant 1 à 24 heures, ou encore,
- par lyophilisation, par exemple dans un lyophilisateur de type CHRIST ALPHA® 1-2 LD Plus, pendant 48 heures à 72 heures,
- ou encore par atomisation.

Dans une deuxième variante d'un procédé selon l'invention, le traitement solvothermal du gel précurseur est réalisé en continu.

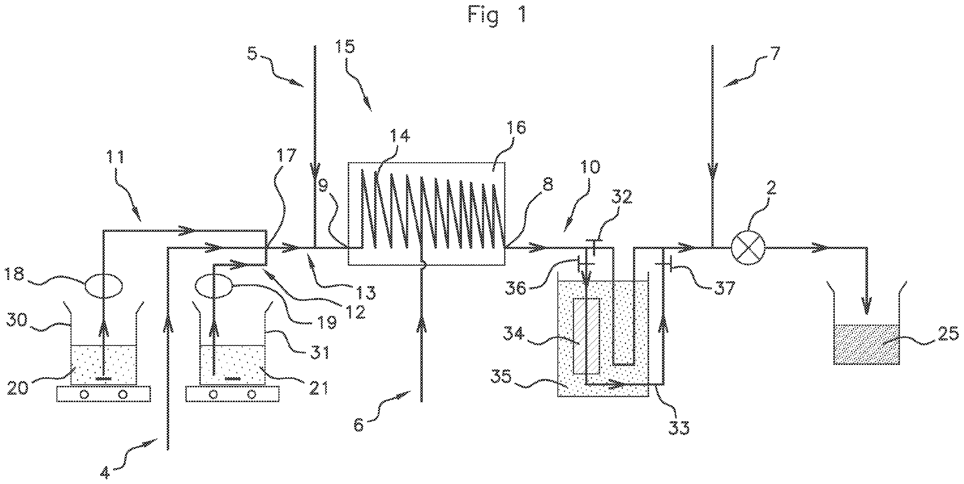

Dans un procédé selon l'invention dans lequel le traitement solvothermal est réalisé en continu, on utilise un réacteur 15 de préparation de particules minérales d'un composé selon l'invention en continu (tel qu'illustré à la figure 1) comprenant :

- une première portion 11 de conduit dans laquelle on introduit une première solution 20 aqueuse comprenant le gel précurseur,
- une deuxième portion 12 de conduit dans laquelle on introduit une deuxième solution 21 aqueuse comprenant au moins un hydroxyde de formule AOH (KOH par exemple),

- une troisième portion 13 de conduit disposée après la première portion 11 de conduit et la deuxième portion 12 de conduit et se prolongeant jusqu'à une entrée 9 d'une enceinte 16 de réaction, la première portion 11 de conduit et la deuxième portion 12 de conduit se rejoignant en un point 17 à partir duquel commence la troisième portion 13 de conduit,
- un conduit 14 réactionnel s'étendant à partir de l'entrée 9 dans l'enceinte 16 de réaction, et après la troisième portion 13 de conduit.

Une pompe péristaltique 18 permet d'alimenter en continu sous pression la première portion 11 de conduit avec la première solution 20 aqueuse contenue dans un réservoir 30 sous agitation. Une deuxième pompe péristaltique 19 permet d'alimenter en continu sous pression la deuxième portion 12 de conduit avec la deuxième solution 21 aqueuse contenue dans un réservoir 31 sous agitation.

En alternative, l'hydroxyde AOH peut également être ajouté au gel précurseur dans le réservoir 30, de l'eau permettant d'ajuster la dilution du gel précurseur pouvant être disposée dans le réservoir 31.

Aux fins de contrôler la température au sein du conduit 14 réactionnel, l'enceinte 16 de réaction est un four comprenant un manchon chauffant comprenant des résistances en matériau céramique. Le conduit 14 réactionnel est en forme générale de serpentin enroulé en de multiples spires à l'intérieur du manchon chauffant, jusqu'à sortir de cette dernière par une sortie 8 constituant la sortie de l'enceinte 16 de réaction.

Le mélange à l'intérieur de la troisième portion 13 de conduit est proche de la température ambiante. La troisième portion 13 de conduit est facultative, le point 17 et l'entrée 9 pouvant être confondus. Dans le mode de réalisation tel que représenté en figure 1 la troisième portion 13 de conduit présente par exemple une longueur comprise entre 10 cm et 20 cm.

Le temps de séjour total dans le dispositif pour préparer des particules synthétiques minérales par un procédé selon l'invention est inférieur à 30 minutes, et en particulier inférieur à 15 minutes voire de moins de 5 minutes ou de l'ordre d'une minute.

En outre, il est possible d'introduire d'autres solutions et notamment d'ajuster la quantité de solvant à différents niveaux du dispositif par exemple à l'aide d'entrées 4, 5 situées avant la zone de traitement solvothermal, l'entrée 4 étant située avant le point 17, l'entrée 6 étant située au niveau de la zone de traitement solvothermal, l'entrée 7 étant située après la sortie de la zone de traitement solvothermal et avant la sortie de la suspension obtenue.

Un régulateur 2 de pression est disposé en aval de l'enceinte 16 de réaction en liaison avec une cinquième portion 10 de conduit s'étendant de la sortie 8 du conduit 14 réactionnel et de l'enceinte 16 de réaction jusqu'à un récipient 25 dans lequel on récupère une suspension comprenant les particules minérales obtenues.

La fermeture d'une vanne 32 interposée sur la cinquième portion 10 de conduit permet de faire circuler la suspension obtenue à la sortie 8 du conduit 14 réactionnel dans un circuit 33 dérivé permettant de faire passer cette suspension à travers un fritté poreux 34 adapté pour retenir les particules et permettre leur récupération. Le fritté poreux 34 est plongé dans un bac à glace 35 permettant de refroidir la suspension sortant du réacteur. Dans ce cas, des vannes 36 et 37 disposées sur le circuit 33 dérivé sont ouvertes. Le fritté poreux 34 est choisi de façon à retenir les particules minérales synthétisées en les séparant du milieu liquide qui les transporte. Le fritté est par exemple réalisé en inox 316L, avec une taille de porosité de 50μm. Lorsque le fritté 34 poreux est colmaté par des particules minérales, il suffit d'ouvrir la vanne 32 et de fermer les vannes 36 et 37, pour récupérer directement la suspension dans le récipient 25, cette suspension étant refroidie en passant par le bac à glace 35, puis lavée et centrifugée plusieurs fois pour récupérer les particules minérales qui peuvent être ensuite séchées, par exemple à l'étuve. Dans une autre variante (non représentée), il est bien sûr également possible de prévoir plusieurs frittés en parallèle, ce qui permet de diriger la suspension obtenue à la sortie du conduit 14 réactionnel vers un autre fritté dès que le précédent est colmaté par les particules minérales.

En variante, dans le cas où on prépare initialement une solution comprenant le gel précurseur et l'hydroxyde AOH, une même et unique portion de conduit remplace la première portion 11 de conduit et la deuxième portion 12 de conduit. Dans une autre variante, il est également possible que le réservoir 30 contienne une solution comprenant le gel précurseur et que le réservoir 31 contienne l'hydroxyde AOH .

Dans chaque cas, il est important de contrôler la dilution du gel précurseur introduit dans chaque portion de conduit et dans le conduit 14 réactionnel de façon à permettre une circulation en continu du milieu réactionnel dans le conduit 14 réactionnel, et dans l'ensemble des conduits d'amenée de ladite composition de gel précurseur jusqu'à l'entrée 9 de l'enceinte 16 de réaction. La concentration en gel précurseur dans ladite composition de gel précurseur introduite à l'entrée de l'enceinte 16 de réaction est avantageusement comprise entre $10^{-3}$ mol/L et plusieurs mol/L, par exemple de l'ordre de 0,01mol/L. À noter que cette concentration est beaucoup plus faible que les concentrations utilisées dans les procédés de préparation de particules synthétiques minérales telles que des phyllosilicates de l'état de la technique.

Le traitement solvothermal réalisé dans le conduit 14 réactionnel est un traitement solvothermal qui peut en particulier être réalisé dans des conditions supercritiques ou sous-critiques, et en particulier sous-critiques homogènes. Ainsi, on peut choisir la température et la pression auxquelles on réalise ce traitement solvothermal de façon à ce que la composition de gel précurseur introduite à l'entrée du réacteur, et en particulier le (ou les) solvant(s) qu'elle comprend, se trouve(nt) dans des conditions supercritiques ou dans des conditions sous-critiques homogènes, c'est-à-dire au-dessus de la courbe d'équilibre liquide-gaz du solvant, et de façon à ce que le solvant se présente à l'état liquide et non sous la forme d'un mélange liquide-gaz, ni de gaz seul.

À l'issue de ce traitement solvothermal, on obtient une suspension comprenant des particules minérales en solution, notamment en solution aqueuse. Au terme de ce traitement solvothermal, la suspension obtenue est récupérée par filtration, par exemple à l'aide d'un fritté en céramique, ou encore par centrifugation (entre 3000 et 15000 tours par minute, pendant 5 à 60 minutes) puis élimination du surnageant.

La composition comprenant des particules minérales récupérée peut éventuellement être lavée avec de l'eau, en particulier avec de l'eau distillée ou osmosée, en effectuant par exemple un ou deux cycles de lavage/centrifugation.

La composition comprenant des particules minérales récupérée après la dernière centrifugation peut ensuite être séchée :

-   à l'étuve à une température comprise entre 60°C et 130°C, pendant 1 à 24 heures, ou encore,

- par lyophilisation, par exemple dans un lyophilisateur de type CHRIST ALPHA® 1-2 LD Plus, pendant 48 heures à 72 heures,
- par irradiation de micro-ondes,
- par atomisation,
- ou encore par toute autre technique de séchage de poudre.

Les inventeurs ont ainsi pu noter que, non seulement, un temps extrêmement court (moins d'une minute) de traitement solvothermal en conditions supercritiques suffit pour permettre une conversion du gel initial en un matériau cristallisé et thermiquement stable, mais, également, que les particules minérales synthétiques obtenues présentent une cristallinité comparable à celle de micas naturels.

Les particules minérales contenues dans une composition obtenue par un procédé selon l'invention présentent des propriétés remarquables en termes de pureté, de cristallinité et de stabilité thermique, et ce, pour une durée de traitement solvothermal extrêmement réduite.

B/ - ANALYSE ET CARACTERISATION STRUCTURELLE

1/ - Analyses en diffraction des rayons X

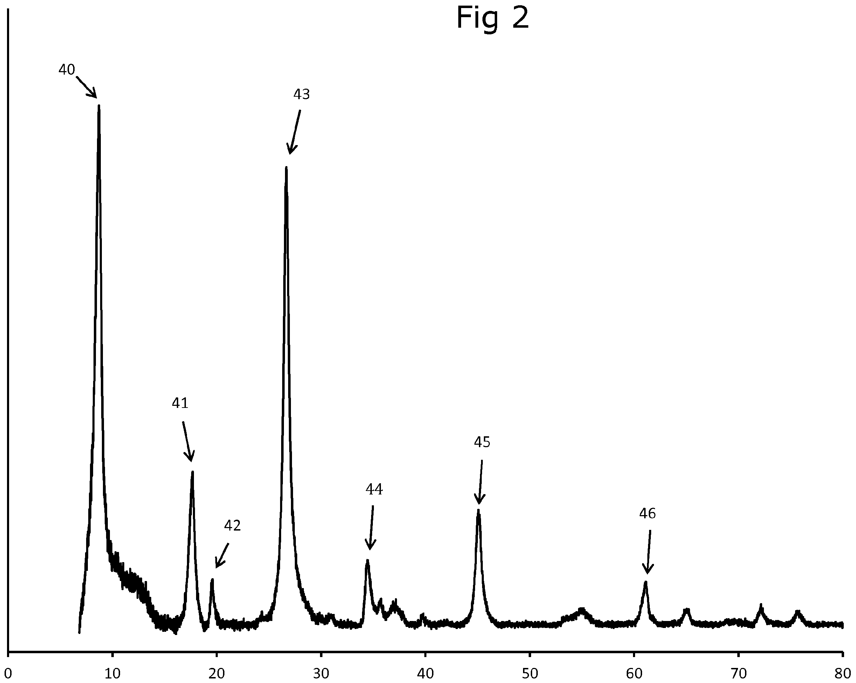

Les figures 2, 4 et 6 à 11 présentent des diffractogrammes RX sur chacun desquels est représentée l'intensité relative du signal (nombre de coups par seconde) en fonction de la distance inter-réticulaire en Angstrœm.

Un composé selon l'invention présente, en diffraction des rayons X, au moins une raie de diffraction caractéristique d'un plan (001) situé à une distance comprise entre 9,80 Å et 10,20 Å. Une telle raie de diffraction est caractéristique des micas.

Les figures 2, 4 et 6 à 11 présentent respectivement les résultats d'analyses réalisées en diffraction des rayons X sur :

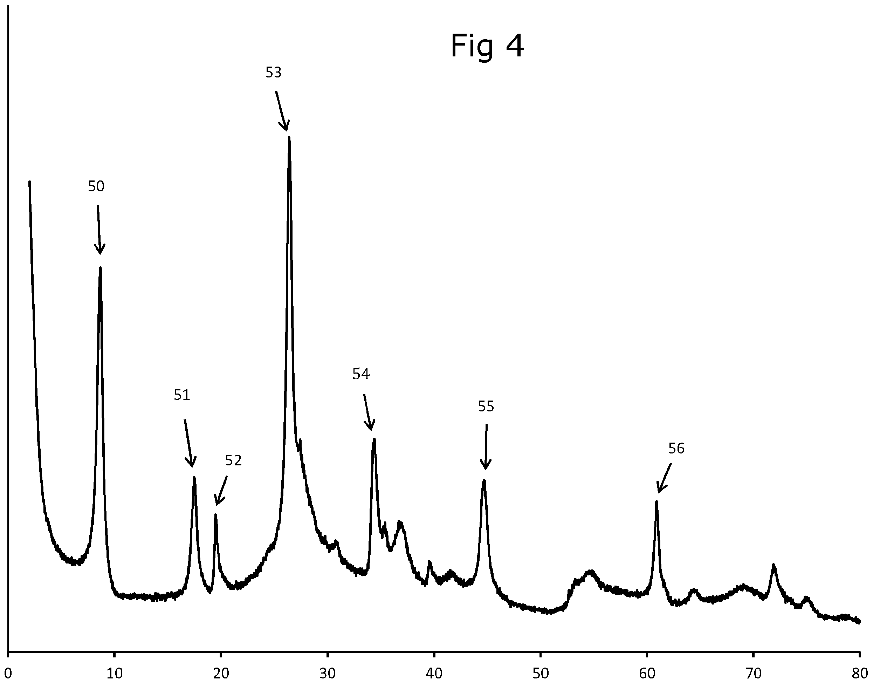

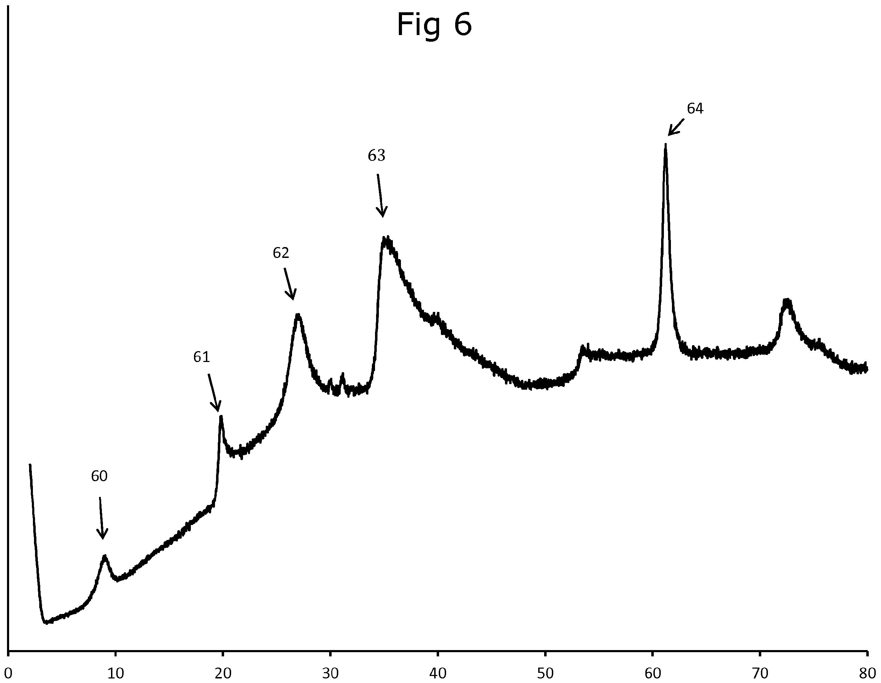

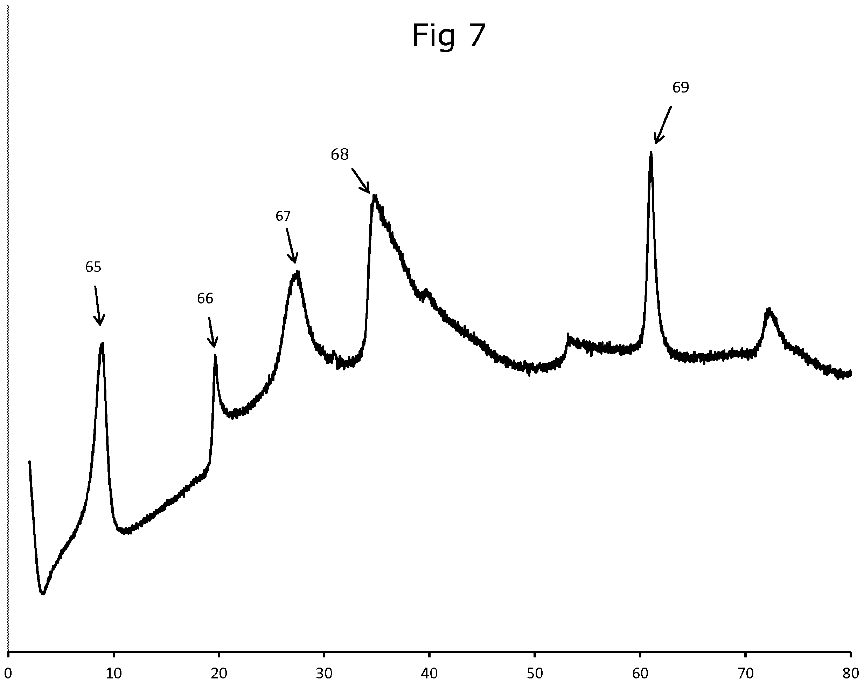

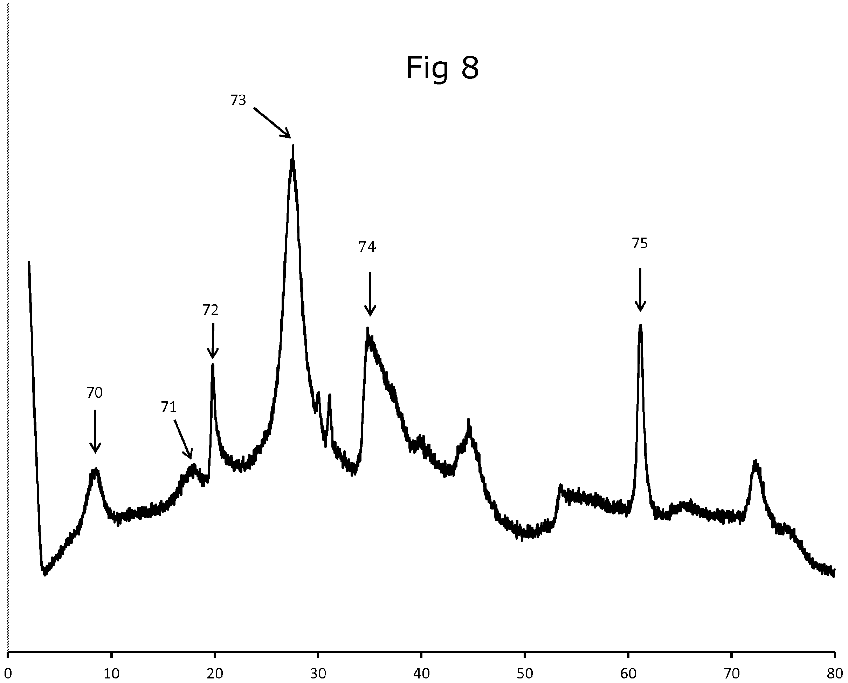

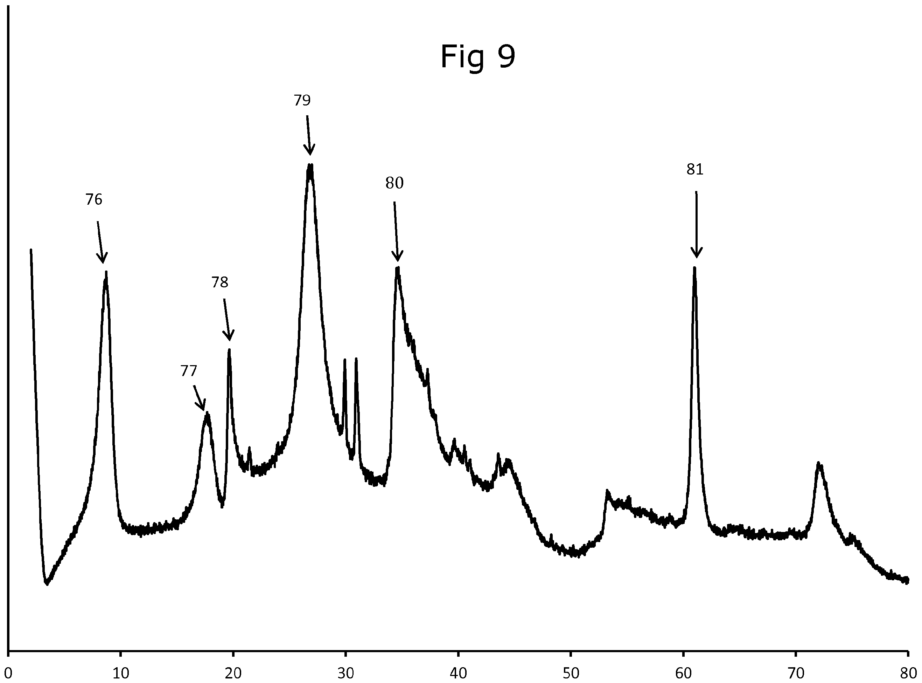

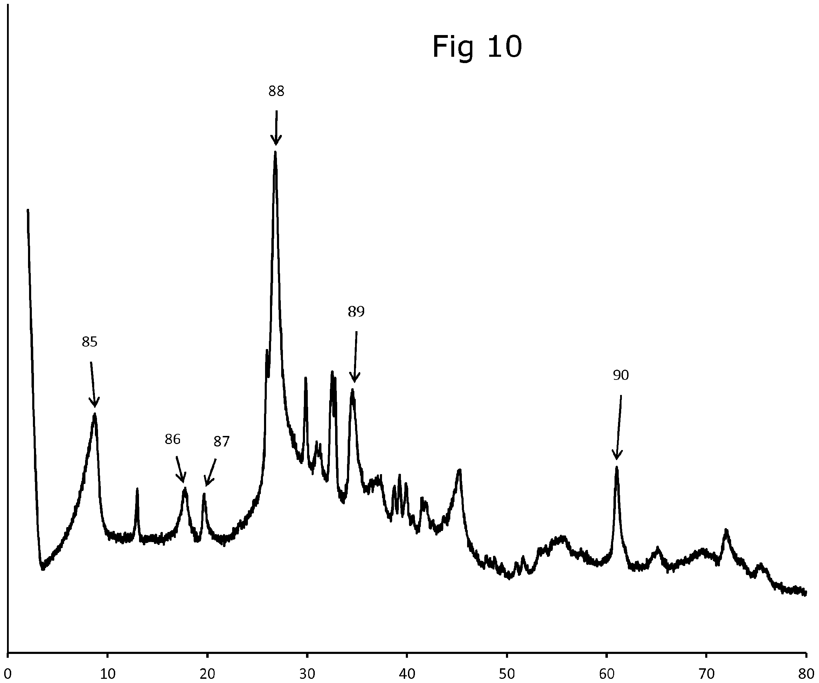

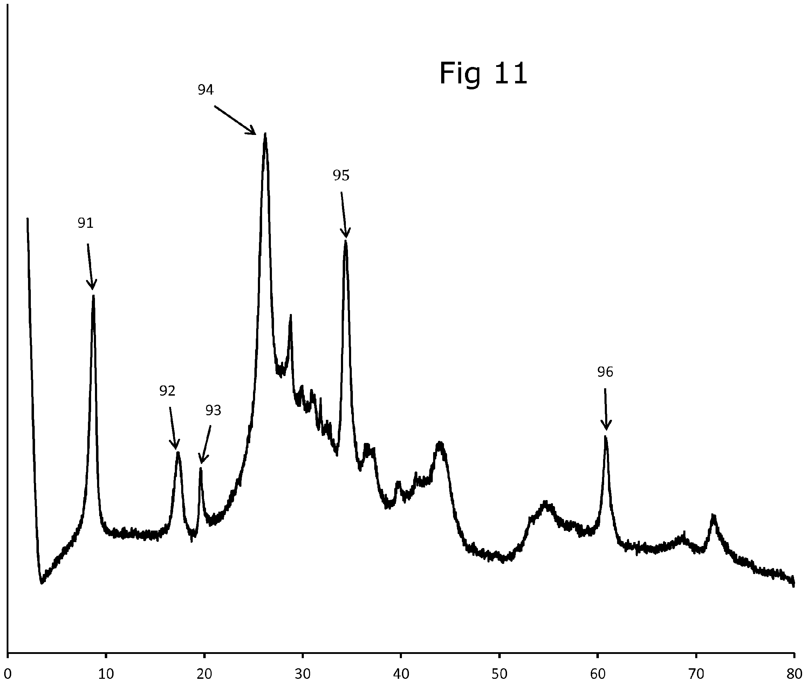

- une composition de mica synthétique comprenant un composé de formule $K_{0,3}Si_4Mg_{2,7}O_{10}(OH)_2$ obtenue après un traitement hydrothermal de 24 heures à 300°C (figure 2),
- une composition de mica synthétique comprenant un composé de formule $K_{0,3}Si_4Mg_{2,7}O_{10}(OH)_2$ obtenue après un traitement hydrothermal de 24 heures à 300°C suivi d'un traitement thermique anhydre à 550°C pendant 5 heures (figure 4),
- une composition de mica synthétique comprenant un composé de formule $K_{0,3}Si_4Ni_{1,35}Mg_{1,35}O_{10}(OH)_2$ obtenue après un traitement hydrothermal de 24 heures à 300°C (figure 6),
- une composition de mica synthétique comprenant un composé de formule $K_{0,3}Si_4Ni_{1,35}Mg_{1,35}O_{10}(OH)_2$ obtenue après un traitement hydrothermal de 24 heures à 300°C suivi d'un traitement thermique anhydre à 550°C pendant 5 heures (figure 7),
- une composition de mica synthétique comprenant un composé de formule $Li_{0,3}Si_4Mg_{2,7}O_{10}(OH)_2$ obtenue après un traitement hydrothermal de 24 heures à 300°C (figure 8),
- une composition de mica synthétique comprenant un composé de formule $Li_{0,3}Si_4Mg_{2,7}O_{10}(OH)_2$ obtenue après un traitement hydrothermal de 24 heures à 300°C suivi d'un traitement thermique anhydre à 550°C pendant 5 heures (figure 9),
- une composition de mica synthétique comprenant un composé de formule $K\,Si_4Mg_{2,5}O_{10}(OH)_2$ obtenue après un traitement hydrothermal de 24 heures à 300°C (figure 10),
- une composition de mica synthétique comprenant un composé de formule $K\,Si_4Mg_{2,5}O_{10}(OH)_2$ obtenue après un traitement hydrothermal de 24 heures à 300°C suivi d'un traitement thermique anhydre à 550°C pendant 5 heures (figure 11).

Le diffractogramme RX représenté en figure 2 a été enregistré sur un appareil CPS 120 commercialisé par la société INEL (Artenay, France). Il s'agit d'un diffractomètre à détecteur courbe permettant une détection en temps réel sur un domaine angulaire de 120°. La tension d'accélération utilisée est de 40 kV et l'intensité est de 25 mA. La relation de Bragg donnant l'équidistance structurale est : $d_{hkl}=0,89449/sin\theta$ (avec l'utilisation d'une anticathode au cobalt).

Les diffractogrammes RX représentés en figures 4 et 6 à 11 ont été enregistrés sur un diffractomètre Panalytical MPDPro® commercialisé par la société Panalytical® (Pays-Bas). Il s'agit d'un diffractomètre thêta/thêta multi-configurations (transmission, réflexion, température variable) équipé d'un détecteur linéaire rapide. La relation de Bragg donnant l'équidistance structurale est : $d_{hkl}=0,7703/sin\theta$ (avec l'utilisation d'une anticathode au cuivre).

2/ - Analyses thermiques

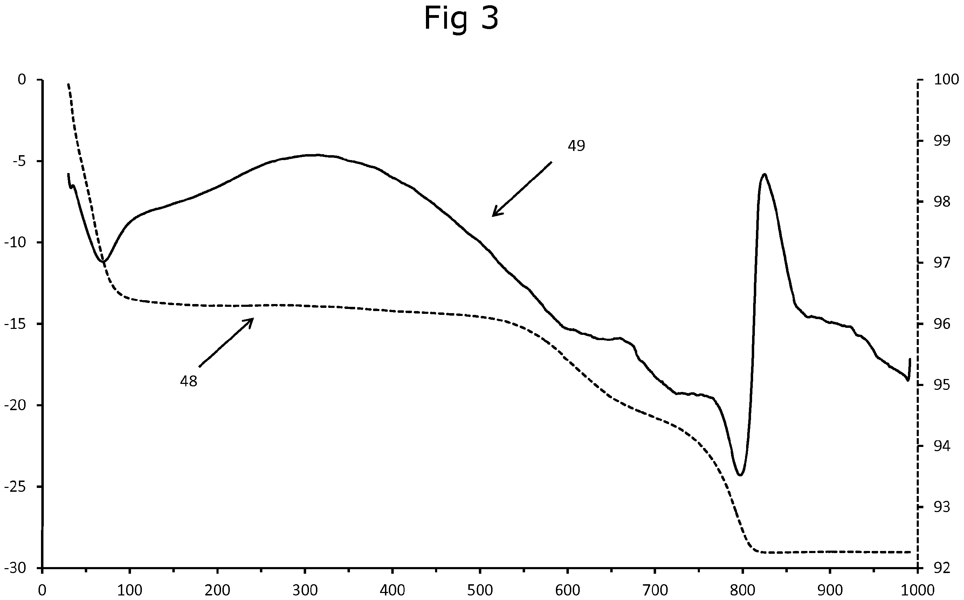

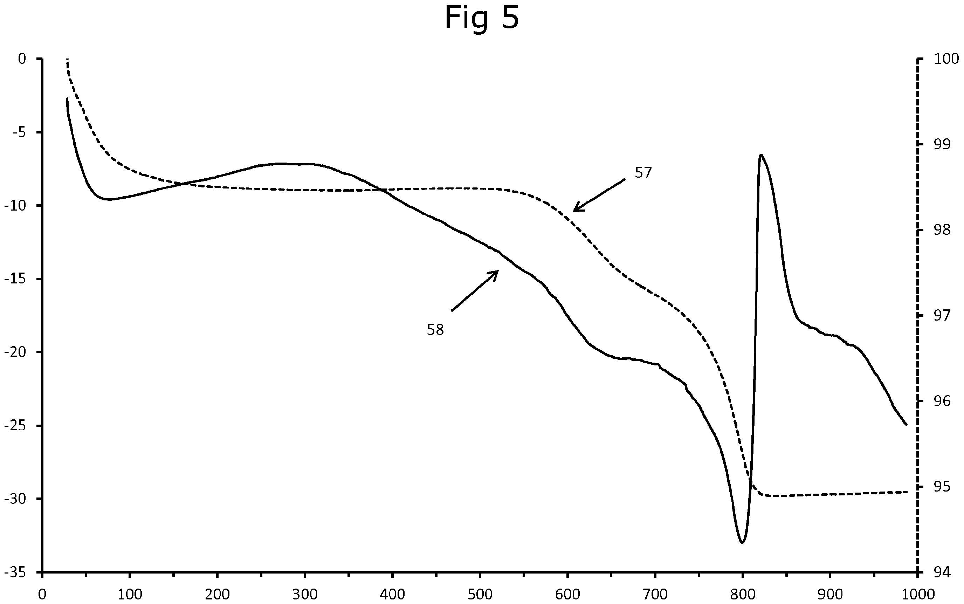

Les figures 3 et 5 présentent des courbes obtenues par analyse thermogravimétrique (ATG) (courbes 48 et 57) et par analyse thermodifférentielle (ATD) (courbes 49 et 58) d'une composition comprenant un composé selon l'invention ($Al_2Si_2O_5(OH)_4$) obtenue après un traitement hydrothermal de 24 heures à 300°C (figure 3) et la même composition ayant en outre été soumise à un traitement thermique anhydre à 550°C pendant 5 heures.

Sur les figures 3 et 5, les courbes 49 et 58 (analyse thermodifférentielle ; en trait plein sur les figures 3 et 5) représentent la chaleur libérée ou absorbée par l'échantillon de composition analysé (en mW sur l'axe des ordonnées situé du côté gauche du thermogramme) en fonction de la température (allant de 0°C à 1000°C). Sur la figure 3, les courbes 48 et 57 (analyse thermogravimétrique ; en pointillés sur les figures 3 et 5) représentent la variation de masse de l'échantillon de composition analysé (en % sur l'axe des ordonnées situé du côté droit du thermogramme) en fonction de la température (allant de 0°C à 1000°C).

Les thermogrammes obtenus sont caractéristiques des micas, avec une déshydroxylation à partir de 550°C, et une transformation de phase vers 800°C. La température de déshydroxylation est légèrement plus basse que pour un mica naturel, ce qui s'explique par la taille plus petite des particules obtenues.

Les analyses d'ATD et d'ATG ont été effectuées avec une thermobalance Diamond TG/TDA® commercialisée par la société PERKIN ELMER® (USA) dans une gamme de température s'étendant de 30°C à 1000°C, sous air, et avec une vitesse de chauffe de 10°C/min.

3/ - Observations microscopiques et appréciation de la granulométrie des particules

Compte tenu de la grande finesse des poudres que peuvent constituer les compositions conformes à l'invention, la taille et la distribution granulométrique des particules minérales qui les composent ont été appréciées par observation en microscopie électronique à balayage et à effet de champ et en microscopie électronique en transmission.

On constate que la taille moyenne des particules élémentaires varie entre 10nm et 400nm. En particulier, les particules présentent une épaisseur comprise entre 1nm et 60nm et une plus grande dimension comprise entre 10nm et 500nm.

En outre, il a été observé que les particules de mica synthétique préparé par un procédé selon l'invention présentent un effet nacré susceptible de présenter un intérêt dans de nombreux domaines industriels.

Les exemples qui suivent illustrent le procédé de préparation selon l'invention et les caractéristiques structurales des composés ainsi obtenus.

EXEMPLE 1 - Préparation d'une composition comprenant des particules minérales selon l'invention

On prépare 300mL d'une solution aqueuse de sulfate de magnésium (33,27g soit 0,135mole) et d'acide sulfurique (120g d'une solution à 0,5M).

On prépare ensuite une solution de métasilicate de potassium en diluant 59,35g (soit 0,2mole) d'une solution aqueuse de métasilicate de potassium ($K_2SiO_3$) à 52% d'extrait sec dans 150mL d'eau déminéralisée. Cette solution de métasilicate de potassium est ajoutée à la solution précédente et un précipité blanc se forme instantanément.

On agite la suspension obtenue pendant 5 minutes. On réalise ensuite trois cycles de lavage avec de l'eau distillée et de centrifugation à 8000tours/min pendant 10 minutes à chaque nouvelle centrifugation. Ces lavages successifs avec élimination de la solution surnageante après chaque centrifugation permettent d'éliminer le sulfate de potassium formé au cours de la réaction de précipitation du gel précurseur. Enfin, le précipité blanc récupéré est mis en suspension dans de l'eau déminéralisée jusqu'à un volume final de 500 ml et soumis aux ultrasons sous agitation magnétique pendant 10 minutes jusqu'à obtention d'une suspension homogène, de couleur blanche, de gel précurseur.

On ajoute ensuite au gel précurseur 988 mg de potasse KOH hydratée (contenant 85% de potasse et 15% d'eau, soit 0,015 mole de potasse pure ajoutée) préalablement diluée dans 30 mL d'eau déminéralisée, et on agite magnétiquement la suspension obtenue pendant 5 minutes à la température ambiante (22,5°C).

On soumet ensuite le gel précurseur placé dans un réacteur en titane clos disposé dans un four à un traitement hydrothermal à une température de 300°C pendant 24 heures sous la pression de vapeur saturante de l'eau dans le réacteur.

Après refroidissement jusqu'à la température ambiante, le réacteur est ouvert et la suspension obtenue est centrifugée. Après centrifugation, on récupère une composition comprenant au moins 80% en poids de particules de composé de formule $K_{0,3}Si_4Mg_{2,7}O_{10}(OH)_2$.

La composition de particules récupérées après centrifugation est séchée à l'étuve pendant 12 heures à 120°C puis broyée dans un mortier. La composition obtenue se présente sous la forme d'une poudre de couleur blanche.

Le diffractogramme des rayons X de la composition de particules de composé de formule $K_{0,3}Si_4Mg_{2,7}O_{10}(OH)_2$, ainsi obtenue est représenté sur la figure 2. Le diffractogramme des rayons X de cette composition présente les raies de diffraction caractéristiques suivantes :

- un plan (001) situé à une distance de 10,15 Å (raie 40);
- un plan (002) situé à une distance de 5,03 Å (raie 41);
- un plan (020) situé à une distance de 4,53 Å (raie 42);
- des plans (003) et (022) situés à une distance de 3,34 Å (raie 43);
- un plan $(13\overline{1})$ situé à une distance de 2,60 Å (raie 44);
- un plan (005) situé à une distance de 2,01 Å (raie 45);
- un plan (060) situé à une distance de 1,52 Å (raie 46).

Les courbes 48 et 49 obtenues par ATG-ATD de la composition de particules de composé de formule $K_{0,3}Si_4Mg_{2,7}O_{10}(OH)_2$ ainsi obtenue sont représentées sur la figure 3. Un tel thermogramme est caractéristique des micas, avec une déshydroxylation à partir de 550°C, et une transformation de phase vers 800°C. Ces températures de transformation sont légèrement plus basses que pour un mica naturel car la taille des particules obtenues est plus petite.

On soumet ensuite la composition à un traitement thermique anhydre à 550°C dans un four pendant 5 heures. La composition obtenue après le traitement thermique anhydre reste blanche.

Le diffractogramme des rayons X de la composition de particules de composé de formule $K_{0,3}Si_4Mg_{2,7}O_{10}(OH)_2$ obtenue après un traitement thermique anhydre à 550°C est représenté sur la figure 4. Le diffractogramme des rayons X de cette composition présente, après le traitement thermique anhydre, les raies de diffraction caractéristiques suivantes :

- un plan (001) situé à une distance de 10,24 Å (raie 50);
- un plan (002) situé à une distance de 5,02 Å (raie 51);
- un plan (020) situé à une distance de 4,56 Å (raie 52);
- des plans (003) et (022) situés à une distance de 3,37 Å (raie 53);
- un plan (131) situé à une distance de 2,60 Å (raie 54);
- un plan (005) situé à une distance de 2,02 Å (raie 55);
- un plan (060) situé à une distance de 1,52 Å (raie 56).

Comme on peut le voir sur la figure 4 comparée à la figure 2, un tel traitement thermique anhydre permet d'augmenter la proportion en particules minérales synthétiques de formule $K_{0,3}Si_4Mg_{2,7}O_{10}(OH)_2$ dans la composition obtenue. En particulier, on peut observer que l'épaulement initialement présent à la base du pic correspondant au plan (001) sur la figure 2 a disparu sur la figure 4.

Les courbes 57 et 58 obtenues par ATG-ATD de la composition de particules de composé de formule $K_{0,3}Si_4Mg_{2,7}O_{10}(OH)_2$ ainsi obtenue après un tel traitement thermique anhydre sont représentées sur la figure 5. Comme la figure 3, un tel thermogramme est caractéristique des micas, avec une déshydroxylation à partir de 550°C, et une transformation de phase vers 800°C. Ces températures de transformation sont légèrement plus basses que pour un mica naturel car la taille des particules obtenues est plus petite.

Sur les figures 3 et 5, les courbes 49 et 58 (analyse thermodifférentielle ; en trait plein) représentent la chaleur libérée ou absorbée par l'échantillon de composition analysé (en mW sur l'axe des ordonnées situé du côté gauche du thermogramme) en fonction de la température. Sur la figure 3, les courbes 48 et 57 (analyse thermogravimétrique ; en pointillés) représentent la variation de masse de l'échantillon de composition analysé (en % sur l'axe des ordonnées situé du côté droit du thermogramme) en fonction de la température.

EXEMPLE 2 - Préparation d'une composition comprenant des particules minérales selon l'invention

On prépare 300mL d'une solution aqueuse de sulfate de magnésium (16,64 g soit 0,0675 mole), de sulfate de nickel (17,74 g soit 0,0675 mole) et d'acide sulfurique (120 g d'une solution à 0,5M).

On prépare ensuite une solution de métasilicate de potassium en diluant 59,35g (soit 0,2mole) d'une première solution aqueuse de métasilicate de potassium à 52% d'extrait sec dans 150 mL d'eau déminéralisée. Cette solution de métasilicate de potassium est ajoutée à la solution précédente et un précipité vert se forme instantanément.

On agite la suspension obtenue pendant 5 minutes. On réalise ensuite trois cycles de lavage avec de l'eau distillée et de centrifugation à 8000tours/min pendant 10 minutes à chaque nouvelle centrifugation. Ces lavages successifs avec élimination de la solution surnageante après chaque centrifugation permettent d'éliminer le sulfate de potassium formé au cours de la réaction de précipitation du gel précurseur. Enfin, le précipité vert récupéré est mis en suspension dans de l'eau déminéralisée jusqu'à un volume final de 500 ml et soumis aux ultrasons sous agitation magnétique pendant 10 minutes jusqu'à obtention d'une suspension homogène, de couleur verte, de gel précurseur.

On ajoute ensuite au gel précurseur 988 mg de potasse KOH hydratée (contenant 85% de potasse et 15% d'eau, soit 0,015 mole de potasse pure ajoutée) préalablement diluée dans 30 mL d'eau déminéralisée et on agite magnétiquement la suspension obtenue pendant 5 minutes à la température ambiante (22,5°C).

On soumet ensuite le gel précurseur placé dans un réacteur en titane clos disposé dans un four à un traitement hydrothermal à une température de 300°C pendant 24 heures sous la pression de vapeur saturante de l'eau dans le réacteur.

Après refroidissement jusqu'à la température ambiante, le réacteur est ouvert et la suspension obtenue est centrifugée. Après centrifugation, on récupère une composition comprenant au moins 80% en poids de particules de composé de formule $K_{0,3}Si_4Ni_{1,35}Mg_{1,35}O_{10}(OH)_2$.

La composition de particules récupérées après centrifugation est séchée à l'étuve pendant 12 heures à 120°C puis broyée dans un mortier. La composition de particules obtenue après séchage se présente sous la forme d'une poudre de couleur verte.

Le diffractogramme des rayons X de la composition de particules de composé de formule $K_{0,3}Si_4Ni_{1,35}Mg_{1,35}O_{10}(OH)_2$, ainsi obtenue est représenté sur la figure 6. Le diffractogramme des rayons X de cette composition présente les raies de diffraction caractéristiques suivantes :

- un plan (001) situé à une distance de 9,70 Å (raie 60);
- un plan (020) situé à une distance de 4,48 Å (raie 61);
- des plans (003) et (022) situés à une distance de 3,27 Å (raie 62);
- un plan (131) situé à une distance de 2,58 Å (raie 63);
- un plan (060) situé à une distance de 1,51 Å (raie 64).

On soumet ensuite la composition à un traitement thermique anhydre à 550°C dans un four pendant 5 heures.

Le diffractogramme des rayons X de la composition de particules de composé de formule $K_{0,3}Si_4Ni_{1,35}Mg_{1,35}O_{10}$ $(OH)_2$ obtenue après un traitement thermique anhydre à 550°C est représenté sur la figure 7. Le diffractogramme des rayons X de cette composition présente les raies de diffraction caractéristiques suivantes :

- un plan (001) situé à une distance de 9,95Å (raie 65);
- un plan (020) situé à une distance de 4,48Å (raie 66);
- des plans (003) et (022) situés à une distance de 3,27Å (raie 67);
- un plan (131) situé à une distance de 2,58Å (raie 68);
- un plan (060) situé à une distance de 1,51Å (raie 69).

Comme on peut le voir sur la figure 7 comparée à la figure 6, un tel traitement thermique anhydre permet d'augmenter la cristallinité des particules de la composition obtenue. En particulier, on peut observer que le pic correspondant au plan (001) a augmenté en intensité et s'est affiné.

EXEMPLE 3 - Préparation d'une composition comprenant des particules minérales selon l'invention

On prépare 300 mL d'une solution aqueuse de sulfate de magnésium (33,27 g soit 0,135 mole) et d'acide sulfurique (120 g d'une solution à 0,5M).

On prépare ensuite une solution de métasilicate de potassium en diluant 59,35 g (soit 0,2 mole) d'une solution aqueuse de métasilicate de potassium ($K_2SiO_3$) à 52% d'extrait sec dans 150 mL d'eau déminéralisée. Cette solution de métasilicate de potassium est ajoutée à la solution précédente et un précipité blanc se forme instantanément.

On agite la suspension obtenue pendant 5 minutes. On réalise ensuite trois cycles de lavage avec de l'eau distillée et de centrifugation à 8000 tours/min pendant 10 minutes à chaque nouvelle centrifugation. Ces lavages successifs avec élimination de la solution surnageante après chaque centrifugation permettent d'éliminer le sulfate de potassium formé au cours de la réaction de précipitation du gel précurseur. Enfin, le précipité récupéré est mis en suspension dans de l'eau déminéralisée jusqu'à un volume final de 500 ml et soumis aux ultrasons sous agitation magnétique pendant 10 minutes jusqu'à obtention d'une suspension homogène, de couleur blanche, de gel précurseur.

On ajoute ensuite au gel précurseur 629 mg d'hydroxyde de lithium (LiOH) (soit 0,015 mole de LiOH) préalablement dilué dans 30 mL d'eau déminéralisée et on agite magnétiquement la suspension obtenue pendant 5 minutes à la température ambiante (22,5°C).

On soumet ensuite le gel précurseur placé dans un réacteur en titane clos disposé dans un four à un traitement hydrothermal à une température de 300°C pendant 24 heures sous la pression de vapeur saturante de l'eau dans le réacteur.

Après refroidissement jusqu'à la température ambiante, le réacteur est ouvert et la suspension obtenue est centrifugée. Après centrifugation, on récupère une composition comprenant au moins 80% en poids de particules de composé de formule $Li_{0,3}Si_4Mg_{2,7}O_{10}(OH)_2$.

La composition de particules récupérées après centrifugation est séchée à l'étuve pendant 12 heures à 120°C puis broyée dans un mortier. La composition de particules obtenue après séchage se présente sous la forme d'une poudre de couleur blanche.

Le diffractogramme des rayons X de la composition de particules de composé de formule $Li_{03}Si_4Mg_{2,7}O_{10}(OH)_2$, ainsi obtenue est représenté sur la figure 8. Le diffractogramme des rayons X de cette composition présente les raies de diffraction caractéristiques suivantes :

- un plan (001) situé à une distance de 10,28Å (raie 70);
- un plan (002) situé à une distance de 4,94Å (raie 71);
- un plan (020) situé à une distance de 4,48Å (raie 72);
- des plans (003) et (022) situés à une distance de 3,30Å (raie 73);
- un plan (131) situé à une distance de 2,60Å (raie 74);
- un plan (060) situé à une distance de 1,51Å (raie 75).

On soumet ensuite la composition à un traitement thermique anhydre à 550°C dans un four pendant 5 heures.

Le diffractogramme des rayons X de la composition de particules de composé de formule $Li_{0,3}Si_4Mg_{2,7}O_{10}(OH)_2$ obtenue après un traitement thermique anhydre à 550°C est représenté sur la figure 9. Le diffractogramme des rayons X de cette composition présente, après le traitement thermique anhydre, les raies de diffraction caractéristiques suivantes :

- un plan (001) situé à une distance de 10,12Å (raie 76);
- un plan (002) situé à une distance de 4,95Å (raie 77);
- un plan (020) situé à une distance de 4,50Å (raie 78);
- des plans (003) et (022) situés à une distance de 3,30Å (raie 79);
- un plan ($13\overline{1}$) situé à une distance de 2,59Å (raie 80);
- un plan (060) situé à une distance de 1,52Å (raie 81).

Comme on peut le voir sur la figure 9 comparée à la figure 8, un tel traitement thermique anhydre permet d'augmenter la cristallinité des particules de la composition obtenue. En particulier, on peut observer que le pic correspondant au plan (001) a augmenté en intensité et s'est affiné.

EXEMPLE 4 - Préparation d'une composition comprenant des particules minérales selon l'invention

On prépare 300 mL d'une solution aqueuse de sulfate de magnésium (30,81 g soit 0,125 mole) et d'acide sulfurique (120 g d'une solution à 0,5M).

On prépare ensuite une solution de métasilicate de potassium en diluant 59,35 g (soit 0,2mole) d'une solution aqueuse de métasilicate de potassium ($K_2SiO_3$) à 52% d'extrait sec dans 150 mL d'eau déminéralisée. Cette solution de métasilicate de potassium est ajoutée à la solution précédente et un précipité blanc se forme instantanément.

On agite la suspension obtenue pendant 5 minutes. On réalise ensuite trois cycles de lavage avec de l'eau distillée et de centrifugation à 8000 tours/min pendant 10 minutes à chaque nouvelle centrifugation. Ces lavages successifs avec élimination de la solution surnageante après chaque centrifugation permettent d'éliminer le sulfate de potassium formé au cours de la réaction de précipitation du gel précurseur. Enfin, le précipité blanc récupéré est mis en suspension dans de l'eau déminéralisée jusqu'à un volume final de 500 ml et soumis aux ultrasons sous agitation magnétique pendant 10 minutes jusqu'à obtention d'une suspension homogène, de couleur blanche, de gel précurseur.

On ajoute ensuite au gel précurseur 3,42g de potasse KOH hydratée (contenant 85% de potasse et 15% d'eau, soit 0,052 mole de potasse pure ajoutée) préalablement diluée dans 30 mL d'eau déminéralisée, et on agite magnétiquement la suspension obtenue pendant 5 minutes à la température ambiante (22,5°C).

On soumet ensuite le gel précurseur placé dans un réacteur en titane clos disposé dans un four à un traitement hydrothermal à une température de 300°C pendant 24 heures sous la pression de vapeur saturante de l'eau dans le réacteur.

Après refroidissement jusqu'à la température ambiante, le réacteur est ouvert et la suspension obtenue est centrifugée. Après centrifugation, on récupère une composition comprenant au moins 80% en poids de particules de composé de formule $K\ Si_4Mg_{2,5}O_{10}(OH)_2$.

La composition de particules récupérées après centrifugation est séchée à l'étuve pendant 12 heures à 120°C puis broyée dans un mortier. La composition obtenue se présente sous la forme d'une poudre de couleur blanche.

Le diffractogramme des rayons X de la composition de particules de composé de formule $K\ Si_4Mg_{2,5}O_{10}(OH)_2$, ainsi obtenue est représenté sur la figure 10. Le diffractogramme des rayons X de cette composition présente les raies de diffraction caractéristiques suivantes :

- un plan (001) situé à une distance de 10,14 Å (raie 85);
- un plan (002) situé à une distance de 5,04 Å (raie 86);
- un plan (020) situé à une distance de 4,51 Å (raie 87);
- un plan (003) situé à une distance de 3,33 Å (raie 88);
- un plan (131) situé à une distance de 2,30 Å (raie 89);
- un plan (060) situé à une distance de 1,52 Å (raie 90).

On soumet ensuite la composition à un traitement thermique anhydre à 550°C dans un four pendant 4 heures. La composition obtenue après le traitement thermique anhydre reste blanche.

Le diffractogramme des rayons X de la composition de particules de composé de formule $K\,Si_4Mg_{2,5}O_{10}(OH)_2$ obtenue après un traitement thermique anhydre à 550°C est représenté sur la figure 11. Le diffractogramme des rayons X de cette composition présente, après le traitement thermique anhydre, les raies de diffraction caractéristiques suivantes :

- un plan (001) situé à une distance de 10,12Å (raie 91);
- un plan (002) situé à une distance de 5,09Å (raie 92);
- un plan (020) situé à une distance de 4,52Å (raie 93);
- un plan (003) situé à une distance de 3,40Å (raie 94);
- un plan (131) situé à une distance de 2,60Å (raie 95);
- un plan (060) situé à une distance de 1,52Å (raie 96).

Comme on peut le voir sur la figure 11 comparée à la figure 10, un tel traitement thermique anhydre permet d'augmenter la cristallinité des particules de la composition obtenue. En particulier, on peut observer que le pic correspondant au plan (001) a augmenté en intensité et s'est affiné.

EXEMPLE 5 - Préparation en continu d'une composition comprenant des particules minérales synthétiques selon l'invention

On prépare 300 mL d'une solution aqueuse de sulfate de magnésium (33,27 g soit 0,135 mole) et d'acide sulfurique (120 g d'une solution à 0,5M).

On prépare ensuite une solution de métasilicate de potassium en diluant 59,35 g (soit 0,2 mole) d'une solution aqueuse de métasilicate de potassium ($K_2SiO_3$) à 52% d'extrait sec dans 150 mL d'eau déminéralisée. Cette solution de métasilicate de potassium est ajoutée à la solution précédente et un précipité blanc se forme instantanément.

On agite la suspension obtenue pendant 5 minutes. On réalise ensuite trois cycles de lavage avec de l'eau distillée et de centrifugation à 8000 tours/min pendant 10 minutes à chaque nouvelle centrifugation. Ces lavages successifs avec élimination de la solution surnageante après chaque centrifugation permettent d'éliminer le sulfate de potassium formé au cours de la réaction de précipitation du gel précurseur. Enfin, le précipité blanc récupéré est mis en suspension dans de l'eau déminéralisée jusqu'à un volume final de 500 ml et soumis aux ultrasons sous agitation magnétique pendant 10 minutes jusqu'à obtention d'une suspension homogène, de couleur blanche, de gel précurseur.

On ajoute ensuite au gel précurseur 988 mg de potasse KOH hydratée (contenant 85% de potasse et 15% d'eau, soit 0,015 mole de potasse pure ajoutée) préalablement diluée dans 30 mL d'eau déminéralisée, et on agite magnétiquement la suspension obtenue pendant 5 minutes à la température ambiante (22,5°C).

On place ensuite le gel précurseur dilué dans 300 mL d'eau pure dans le réservoir 30 (cf. figure 1). De l'eau pure permettant également d'ajuster, si nécessaire, la dilution du gel précurseur dans la portion 13 de conduit est disposée dans le réservoir 31.

Les pompes péristaltiques 18, 19 permettent d'amener séparément les deux solutions par des conduits en acier présentant un diamètre externe de 1/8 de pouce (3,175 mm) et un diamètre interne de 1,57 mm, et à un débit de 2 mL/min chacune, soit un débit total de 4 mL/min au point 17 où le mélange de la solution contenant le gel précurseur et l'eau pure intervient en continu, quelques centimètres avant l'entrée 9 du conduit 14 réactionnel. La température dans l'enceinte 16 est de 400°C, et la pression dans le conduit 14 réactionnel est maintenue (grâce au régulateur 2 de pression) supérieure à 22,1 MPa (de l'ordre de 25 MPa), de sorte que le milieu réactionnel qui circule à l'intérieur du conduit 14 réactionnel dans l'enceinte 16 soit dans des conditions supérieures au point critique de l'eau (374°C, 221 bars).

Le gel précurseur subit ainsi un traitement hydrothermal dans l'enceinte 16 de réaction, qui permet de transformer ce gel précurseur en une suspension de particules minérales synthétiques de formule $K_{0,3}Si_4Mg_{2,7}O_{10}(OH)_2$. Le temps de séjour dans le conduit 14 réactionnel entre l'entrée 9 et la sortie 8 est de 40 secondes.

Après refroidissement la suspension issue de la sortie 8 du réacteur 15 est une suspension colloïdale de particules minérales synthétiques de formule $K_{0,3}Si_4Mg_{2,7}O_{10}(OH)_2$. Elle présente l'aspect d'une composition laiteuse blanche qui décante en plusieurs dizaines de minutes. Cette suspension est soumise à un cycle de centrifugation (10 min à 8000 tours/min). Après centrifugation, on récupère d'une part une composition comprenant des particules minérales synthétiques de formule K $Si_4Mg_{2,5}O_{10}(OH)_2$, et, d'autre part, une solution aqueuse surnageante.

La composition de particules récupérées après centrifugation est séchée à l'étuve (120°C, 12 heures) puis broyé au mortier. La composition obtenue se présente sous la forme d'une poudre de couleur blanche.

Le diffractogramme des rayons X de la composition de particules de composé de formule $K_{0,3}Si_4Mg_{2,7}O_{10}(OH)_2$ présente les raies de diffraction caractéristiques suivantes :

- un plan (001) situé à une distance de 10,65 Å ;
- un plan (002) situé à une distance de 5,06 Å ;
- un plan (020) situé à une distance de 4,55 Å ;
- des plans (003) et (022) situés à une distance de 3,35 Å ;
- un plan (13$\bar{1}$) situé à une distance de 2,62 Å ;
- un plan (060) situé à une distance de 1,53 Å.

L'invention peut faire l'objet de très nombreuses variantes de réalisation. En particulier, il est possible de préparer d'autres composés que ceux exemplifiés et répondant à la formule (I) en variant la nature des sels métalliques et de l'hydroxyde employés ou encore en utilisant également une source de germanium en plus d'une source de silicium lors de la préparation du gel précurseur.

**Revendications**

1. Composé minéral synthétique, dit mica synthétique, répondant à la formule (I) suivante :

$$A_t(Si_xGe_{1-x})_4M_zO_{10}(OH)_2 \qquad (I)$$

dans laquelle :

- A désigne au moins un cation interfoliaire monovalent d'un élément métallique, A ayant pour formule $Li_{w(1)}Na_{w(2)}K_{w(3)}Rb_{w(4)}Cs_{w(5)}$; Li désignant le lithium, Na désignant le sodium, K désignant le potassium, Rb désignant le rubidium, Cs désignant le césium et chaque w(i) représentant un nombre réel de l'intervalle [0 ; 1], tel que $\sum_{i=1}^{5} w(i) = 1,$
- t est un nombre réel de l'intervalle [0,3 ; 1],
- Si désigne le silicium,
- Ge désigne le germanium,
- x est un nombre réel de l'intervalle [0 ; 1],
- M désigne au moins un métal divalent ayant pour formule $Mg_{y(1)}Co_{y(2)}Zn_{y(3)}Cu_{y(4)}Mn_{y(5)}Fe_{y(6)}Ni_{y(7)}Cr_{y(8)}$; Mg désignant le magnésium, Co désignant le cobalt, Zn désignant le zinc, Cu désignant le cuivre, Mn désignant le manganèse, Fe désignant le fer, Ni désignant le nickel et Cr désignant le chrome ; chaque y(i) représentant un nombre réel de l'intervalle [0 ; 1], tel que $\sum_{i=1}^{8} y(i) = 1,$
- z est un nombre réel de l'intervalle [2,50 ; 2,85],
- t + 2z est un nombre réel de l'intervalle [5,3 ; 6,0],
- O désigne l'oxygène, et
- H désigne l'hydrogène.

2. Composé selon la revendication 1, **caractérisé en ce que** y(3) est différent de 1.

3. Composé selon l'une des revendications 1 ou 2, **caractérisé en ce que** dans la formule (I), A désigne le potassium.

4. Composé selon l'une des revendications 1 à 3, **caractérisé en ce qu'**il présente, en diffraction des rayons X, au moins une raie de diffraction caractéristique d'un plan (001) situé à une distance comprise entre 9,70Å et 10,70Å.

5. Composé selon l'une des revendications 1 à 4, **caractérisé en ce qu'**il s'organise selon une structure solide formée de feuillets séparés les uns des autres par au moins un espace, dit espace interfoliaire, chaque cation A étant disposé dans lesdits espaces interfoliaires.

6. Composition comprenant au moins un composé selon l'une des revendications 1 à 5.

7. Composition selon la revendication 6, **caractérisée en ce qu'**elle est exempte de fer.

8. Composition selon l'une des revendications 6 ou 7, **caractérisée en ce qu'**elle est exempte d'aluminium.

9. Composition selon l'une des revendications 6 à 8, **caractérisée en ce qu'**elle est exempte de fluor.

10. Composition selon l'une des revendications 6 à 9, **caractérisée en ce qu'**elle comprend des particules dudit composé présentant une taille moyenne comprise entre 10 nm et 400 nm, telle qu'observée par microscopie électronique.

11. Procédé de préparation d'un composé de formule (I) suivante :

$$A_t(Si_xGe_{1-x})_4M_zO_{10}(OH)_2 \qquad (I)$$

dans laquelle :

- A désigne au moins un cation interfoliaire monovalent d'un élément métallique, A ayant pour formule $Li_{w(1)}Na_{w(2)}K_{w(3)}Rb_{w(4)}Cs_{w(5)}$; Li désignant le lithium, Na désignant le sodium, K désignant le potassium, Rb désignant le rubidium, Cs désignant le césium et chaque $w(i)$ représentant un nombre réel de l'intervalle [0 ; 1], tel que $\sum_{i=1}^{5} w(i) = 1,$
- t est un nombre réel de l'intervalle [0,3 ; 1],
- Si désigne le silicium,
- Ge désigne le germanium,
- x est un nombre réel de l'intervalle [0 ; 1],
- M désigne au moins un métal divalent ayant pour formule $Mg_{y(1)}Co_{y(2)}Zn_{y(3)}Cu_{y(4)}Mn_{y(5)}Fe_{y(6)}Ni_{y(7)}Cr_{y(8)}$ ; Mg désignant le magnésium, Co désignant le cobalt, Zn désignant le zinc, Cu désignant le cuivre, Mn désignant le manganèse, Fe désignant le fer, Ni désignant le nickel et Cr désignant le chrome ; chaque y(i) représentant un nombre réel de l'intervalle [0 ; 1], tel que $\sum_{i=1}^{8} y(i) = 1,$
- z est un nombre réel de l'intervalle [2,50 ; 2,85],
- t + 2z est un nombre réel de l'intervalle [5,3 ; 6,0],
- O désigne l'oxygène, et
- H désigne l'hydrogène,

procédé dans lequel :

- on prépare un gel précurseur dudit composé de formule (I), par une réaction de co-précipitation entre :

  ◦ au moins une source d'au moins un élément chimique choisi dans le groupe formé du silicium et du germanium, ladite source dudit élément chimique choisi dans le groupe formé du silicium et du germanium étant choisie dans le groupe formé du métasilicate de potassium et du métagermanate de potassium,
  ◦ au moins un sel métallique dudit métal divalent M,
  ◦ la proportion molaire $(Si_xGe_{1-x})$/M au cours de la préparation dudit gel précurseur est comprise dans l'intervalle [2/1,425 ; 1,6],

- on ajoute audit gel précurseur au moins un hydroxyde de formule AOH de façon à ce que la proportion molaire de A/M soit au moins égale à t/z,
- on réalise un traitement solvothermal dudit gel précurseur à une température comprise entre 300°C et 600°C.

12. Procédé selon la revendication 11, **caractérisé en ce que**, préalablement audit traitement solvothermal et consécutivement à la précipitation dudit gel précurseur, on lave ledit gel précurseur avec un fluide de rinçage, en particulier avec de l'eau.

13. Procédé selon l'une des revendications 11 ou 12, **caractérisé en ce qu'**on réalise ledit traitement solvothermal en continu.

14. Procédé selon l'une des revendications 11 à 13, **caractérisé en ce qu'**on réalise ledit traitement solvothermal en milieu aqueux.

15. Procédé selon l'une des revendications 11 à 14, **caractérisé en ce qu'**après ledit traitement solvothermal, on réalise un traitement thermique anhydre à une température comprise entre 500°C et 600°C.

**Patentansprüche**

1. Synthetische Mineralverbindung, so genannter synthetischer Glimmer, mit der folgenden Formel (I):

$$At(Si_xGe_{i-x})_4M_zO_{10}(OH)_2 \qquad (I)$$

wobei:

- A wenigstens ein interfoliares, monovalentes Kation eines metallischen Elements darstellt, A die Formel $Li_{w(1)}Na_{w(2)}K_{w(3)}Rb_{w(4)}Cs_{w(5)}$ hat, Li Lithium darstellt, Na Natrium darstellt, K Kalium darstellt, Rb Rubidium darstellt, Cs Caesium darstellt und jedes w(i) eine reelle Zahl im Intervall [0 ; 1] bedeutet, sodass $\sum_{i=1}^{5} w(i) = 1,$
- t eine reelle Zahl im Intervall [0,3 ; 1] ist,
- Si Silizium darstellt,
- Ge Germanium darstellt,
- x eine reelle Zahl im Intervall [0 ; 1] ist,
- M wenigstens ein divalentes Metall mit der Formel $Mg_{y(1)}Co_{y(2)}Zn_{y(3)}Cu_{y(4)}Mn_{y(5)}Fe_{y(6)}Ni_{y(7)}Cr_{y(8)}$ darstellt, Mg Magnesium darstellt, Co Kobalt darstellt, Zn Zink darstellt, Cu Kupfer darstellt, Mn Mangan darstellt, Fe Eisen darstellt, Ni Nickel darstellt und Cr Chrom darstellt,

jedes y(i) eine reelle Zahl im Intervall [0; 1] bedeutet, sodass $\sum_{i=1}^{8} y(i) = 1,$
- z eine reelle Zahl im Intervall [2,50 ; 2,85] ist,
- t + 2z eine reelle Zahl im Intervall [5,3 ; 6,0] ist,
- O Sauerstoff darstellt und
- H Wasserstoff darstellt.

2. Verbindung gemäß Anspruch 1, **dadurch gekennzeichnet, dass** y(3) ungleich 1 ist.

3. Verbindung gemäß Anspruch 1 oder 2, **dadurch gekennzeichnet, dass** in der Formel (I) A Kalium darstellt.

4. Verbindung gemäß einem der Ansprüche 1 bis 3, **dadurch gekennzeichnet, dass** sie bei Röntgendiffrektometrie wenigstens einen charakteristischen Beugungsreflex einer Ebene (001) zeigt, die sich in einer Distanz zwischen 9,7 Å und 10,70 Å befindet.

5. Verbindung gemäß einem der Ansprüche 1 bis 4, **dadurch gekennzeichnet, dass** sie sich gemäß einer festen Struktur mit voneinander wenigstens durch einen Raum getrennten Schichten, so genannter interfoliarer Raum, ausrichtet, wobei jedes Kation A in den besagten interfoliaren Räumen angeordnet ist.

6. Zusammensetzung, welche wenigstens eine Verbindung gemäß einem der Ansprüche 1 bis 5 aufweist.

7. Zusammensetzung gemäß Anspruch 6, **dadurch gekennzeichnet, dass** sie frei von Eisen ist.

8. Zusammensetzung gemäß Anspruch 6 oder 7, **dadurch gekennzeichnet, dass** sie frei von Aluminium ist.

9. Zusammensetzung gemäß einem der Ansprüche 6 bis 8, **dadurch gekennzeichnet, dass** sie frei von Fluor ist.

**10.** Zusammensetzung gemäß einem der Ansprüche 6 bis 9, **dadurch gekennzeichnet, dass** sie Partikel der besagten Verbindung aufweist, welche eine mittlere Größe zwischen 10 nm und 400 nm zeigen, so wie durch Elektronenmikroskopie beobachtet.

**11.** Herstellungsverfahren einer Verbindung der folgenden Formel (I):

$$A_t(Si_xGe_{1-x})_4M_zO_{10}(OH)_2 \qquad (I)$$

wobei:

- A wenigstens ein interfoliares, monovalentes Kation eines metallischen Elements darstellt, A die Formel $Li_{w(1)}Na_{w(2)}K_{w(3)}Rb_{w(4)}Cs_{w(5)}$ hat, Li Lithium darstellt, Na Natrium darstellt, K Kalium darstellt, Rb Rubidium darstellt, Cs Caesium darstellt und jedes w(i) eine reelle Zahl im Intervall [0; 1] bedeutet, sodass $\sum_{i=1}^{5} w(i) = 1$,
- t eine reelle Zahl im Intervall [0,3 ; 1] ist,
- Si Silizium darstellt,
- Ge Germanium darstellt,
- x eine reelle Zahl im Intervall [0 ; 1] ist,
- M wenigstens ein divalentes Metall mit der Formel $Mg_{y(1)}Co_{y(2)}Zn_{y(3)}Cu_{y(4)}Mn_{y(5)}Fe_{y(6)}Ni_{y(7)}Cr_{y(8)}$ darstellt, Mg Magnesium darstellt, Co Kobalt darstellt, Zn Zink darstellt, Cu Kupfer darstellt, Mn Mangan darstellt, Fe Eisen darstellt, Ni Nickel darstellt und Cr Chrom darstellt,

jedes y(i) eine reelle Zahl im Intervall [0; 1] bedeutet, sodass $\sum_{i=1}^{8} y(i) = 1$,
- z eine reelle Zahl im Intervall [2,50 ; 2,85] ist,
- t + 2z eine reelle Zahl im Intervall [5,3 ; 6,0] ist,
- O Sauerstoff darstellt und
- H Wasserstoff darstellt,

wobei im Verfahren:

- ein Gel-Präkursor der besagten Verbindung der Formel (I) bereitgestellt wird durch eine Co-Präzipitationsreaktion zwischen:

  ◦ wenigstens einer Quelle wenigstens eines chemischen Elements ausgewählt aus der Gruppe gebildet aus Silizium und Germanium, wobei die besagte Quelle des besagten chemischen Elements, welche ausgewählt ist aus der Gruppe gebildet aus Silizium und Germanium, ausgewählt ist aus der Gruppe gebildet aus Kaliummetasilikat und Kaliummetagermanat,
  ◦ wenigstens einem Metallsalz des besagten divalenten Metalls M,
  ◦ dem molaren Verhältnis $(Si_xGe_{1-x})$/M während des Bereitstellens des besagten Gel-Präkursors im Intervall zwischen [2/1,425 ; 1,6] liegt,

- dem besagten Gel-Präkursor wenigstens ein Hydroxid der Formel AOH auf die Weise zugegeben wird, dass das molare Verhältnis von A/M wenigstens gleich t/z ist,
- eine solvothermale Behandlung des besagten Gel-Präkursors bei einer Temperatur zwischen 300°C und 600°C durchgeführt wird.

**12.** Verfahren gemäß Anspruch 11, **dadurch gekennzeichnet, dass** vor der besagten solvothermalen Behandlung und nach der Präzipitation des besagten Gel-Präkursors der besagte Gel-Präkursor mit einem Spülfluid, insbesondere mit Wasser, gewaschen wird.

**13.** Verfahren gemäß Anspruch 11 oder 12, **dadurch gekennzeichnet, dass** die solvothermale Behandlung kontinuierlich durchgeführt wird.

**14.** Verfahren gemäß einem der Ansprüche 11 bis 13, **dadurch gekennzeichnet, dass** die besagte solvothermale Behandlung im wässrigen Milieu durchgeführt wird.

**15.** Verfahren gemäß einem der Ansprüche 11 bis 14, **dadurch gekennzeichnet, dass** nach der besagten solvothermalen Behandlung eine wasserfreie, thermische Behandlung bei einer Temperatur zwischen 500°C und 600°C durchgeführt wird.

**Claims**

1. Synthetic mineral compound, called synthetic mica, corresponding to the following formula (I):

$$A_t(Si_xGe_{1-x})_4M_zO_{10}(OH)_2 \qquad (I)$$

in which :

- A denotes at least one monovalent interfoliary cation of a metal element, A having the formula $Li_{w(1)}Na_{w(2)}K_{W(3)}Rb_{w(4)}Cs_{w(5)}$; Li denoting lithium, Na denoting sodium, K denoting potassium, Rb denoting rubidium, Cs denoting cesium and each $w(i)$ representing a real number of the interval [0 ; 1], such that

$$\sum_{i=1}^{5} w(i) = 1,$$

- t is a real number of the interval [0.3 ; 1],
- Si denotes silicon,
- Ge denotes germanium,
- x is a real number of the interval [0 ; 1],
- M denotes at least one divalent metal having the formula $Mg_{y(1)}Co_{y(2)}Zn_{y(3)}Cu_{y(4)}Mn_{y(5)}Fe_{y(6)}Ni_{y(7)}Cr_{y(8)}$; Mg denoting magnesium, Co denoting cobalt, Zn denoting zinc, Cu denoting copper, Mn denoting manganese, Fe denoting iron, Ni denoting nickel, and Cr denoting chromium; each y(i) representing a real number of the interval [0 ; 1], such that $\sum_{i=1}^{8} y(i) = 1$
- z is a real number in the range [2.50 ; 2.85],
- t + 2z is a real number of the interval [5.3 ; 6.0]
- O denotes oxygen, and
- H denotes hydrogen.

2. Compound according to claim 1, **characterized in that** y(3) is different from 1.

3. Compound according to one of the claims 1 or 2, **characterized in that** in formula (I), A denotes potassium.

4. Compound according to one of the claims 1 to 3, **characterized in that** it has, in X-ray diffraction, at least one diffraction line characteristic of a plane (001) located at a distance of between 9.70Å and 10.70Å.

5. Compound according to one of the claims 1 to 4, **characterized in that** it is organized according to a solid structure formed of sheets separated from each other by at least one space, called interfoliary space, each cation A being disposed in said interfoliary spaces.

6. Composition comprising at least one compound according to one of the claims 1 to 5.

7. Composition according to claim 6, **characterized in that** it is free of iron.

8. Composition according to one of the claims 6 or 7, **characterized in that** it is free of aluminum.

9. Composition according to one of the claims 6 to 8, **characterized in that** it is free of fluorine.

10. Composition according to one of the claims 6 to 9, **characterized in that** it comprises particles of said compound having an average size of between 10 nm and 400 nm, as observed by electron microscopy.

11. Method for preparing a compound of following formula (I):

$$A_t(Si_xGe_{1-x})_4M_zO_{10}(OH)_2 \qquad (I)$$

in which :

- A denotes at least one monovalent interfoliary cation of a metal element, A having the formula $Li_{w(1)}Na_{w(2)}K_{W(3)}Rb_{w(4)}Cs_{w(5)}$; Li denoting lithium, Na denoting sodium, K denoting potassium, Rb denoting rubidium, Cs denoting cesium and each w(i) representing a real number of the interval [0 ; 1], such that

$$\sum_{i=1}^{5} w(i) = 1,$$

- t is a real number of the interval [0.3 ; 1],
- Si denotes silicon,
- Ge denotes germanium,
- x is a real number of the interval [0 ; 1],
- M denotes at least one divalent metal having the formula $Mg_{y(1)}Co_{y(2)}Zn_{y(3)}Cu_{y(4)}Mn_{y(5)}Fe_{y(6)}Ni_{y(7)}Cr_{y(8)}$; Mg denoting magnesium, Co denoting cobalt, Zn denoting zinc, Cu denoting copper, Mn denoting manganese, Fe denoting iron, Ni denoting nickel, and Cr denoting chromium;

each y(i) representing a real number of the interval [0 ; 1], such that $\sum_{i=1}^{8} y(i) = 1$
- z is a real number in the range [2.50 ; 2.85],
- t + 2z is a real number of the interval [5.3 ; 6.0]
- O denotes oxygen, and
- H denotes hydrogen.

said method in which:

- a precursor gel of the compound of formula (I) is prepared by a co-precipitation reaction between:

  ◦ at least one source of at least one chemical element selected from the group consisting of silicon and germanium, said source of the chemical element selected from the group consisting of silicon and germanium being chosen from the group consisting of potassium metasilicate and potassium metagermanate,
  ◦ at least one metal salt of the divalent metal M,
  ◦ the molar proportion $(Si_xGe_{1-x})/M$ during the preparation of the precursor gel being in the range [2/1.425 ; 1.6]

- at least one hydroxide of formula AOH is added to the precursor gel so that the molar proportion of A/M is at least equal to t/z,
- a solvothermal treatment of the precursor gel is carried out at a temperature of between 300°C and 600°C.

12. Method according to claim 11, **characterized in that**, prior to said solvothermal treatment and following the precipitation of the precursor gel, the precursor gel is washed with a rinsing fluid, in particular with water.

13. Method according to one of the claims 11 or 12, **characterized in that** said solvothermal treatment is carried out continuously.

14. Method according to one of the claims 11 to 13, **characterized in that** said solvothermal treatment is carried out in aqueous medium.

15. Method according to one of the claims 11 to 14, **characterized in that** after said solvothermal treatment, an anhydrous thermal treatment is carried out at a temperature between 500°C and 600°C.

Fig 1

Fig 2

# Fig 3

Fig 4

EP 3 356 293 B1

Fig 5

## Fig 6

EP 3 356 293 B1

## Fig 7

Fig 8

Fig 9

EP 3 356 293 B1

## Fig 10

EP 3 356 293 B1

## Fig 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3666407 A

- WO 2014164632 A

**Littérature non-brevet citée dans la description**

- **RIEDER et al.** Nomenclature of Micas. *The Canadian Mineralogist,* 1998, vol. 36, 41-48
- **CHOI J. et al.** Hydrothermal synthesis of Mn-Mica. *Applied Clay Science,* 2009, vol. 46, 69-72
- *The clay science society of Japan NIII-Electronic Library Service,* 31 Décembre 1987, http://www.ci.nii.ac.jp/els/110003709495.pdf?

- **W T GRANQUIST et al.** *A study of the synthesis of hectorite,* 31 Décembre 1959, http://www.clays.org/journal/archive/volume 8/8-1-150.pdf